(19) Europäisches Patentamt
European Patent Office
Office européen des brevets

(11) **EP 2 975 847 A1**

(12) **EUROPEAN PATENT APPLICATION**
published in accordance with Art. 153(4) EPC

(43) Date of publication:
**20.01.2016 Bulletin 2016/03**

(51) Int Cl.:
*H04N 19/194* (2014.01)    *H04N 19/103* (2014.01)
*H04N 19/157* (2014.01)    *H04N 19/176* (2014.01)
*H04N 19/46* (2014.01)

(21) Application number: **14842875.8**

(22) Date of filing: **25.07.2014**

(86) International application number:
**PCT/JP2014/003933**

(87) International publication number:
**WO 2015/033510 (12.03.2015 Gazette 2015/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.09.2013 JP 2013185994**

(71) Applicant: **NEC Corporation**
**Tokyo 108-8001 (JP)**

(72) Inventors:
• **CHONO, Keiichi**
**Tokyo 108-8001 (JP)**
• **SHIBATA, Seiya**
**Tokyo 108-8001 (JP)**
• **ISHIDA, Takayuki**
**Tokyo 108-8001 (JP)**
• **SHIMOFURE, Kensuke**
**Tokyo 108-8001 (JP)**

(74) Representative: **Vossius & Partner**
**Patentanwälte Rechtsanwälte mbB**
**Siebertstrasse 3**
**81675 München (DE)**

(54) **VIDEO-ENCODING DEVICE, VIDEO-ENCODING METHOD, AND PROGRAM**

(57) A video encoding device includes: a first video encoding section 11 for encoding an input image to generate first coded data; a buffer 12 for storing the input image; a coded data transcoding/merging section 13 for transcoding and then merging the first coded data generated by the first video encoding section 11, to generate second coded data; and a second video encoding section 14 for estimating a syntax value for encoding the input image stored in the buffer 12 based on the second coded data supplied from the coded data transcoding/merging section 13, to generate a bitstream. The first video encoding section 11 has a function of handling a first encoding process included in a second encoding process handled by the second video encoding section 14. The coded data transcoding/merging section 13 transcodes coded data by the first encoding process to coded data corresponding to the second encoding process.

FIG. 22

EP 2 975 847 A1

## Description

### Technical Field

The present invention relates to a video encoding device to which a technique of distributing the computational load of a video encoding process is applied.

### Background Art

In the video coding scheme based on Non Patent Literature (NPL) 1, each frame of digitized video is split into coding tree units (CTUs), and each CTU is encoded in raster scan order. Each CTU is split into coding units (CUs) and encoded, in a quadtree structure. Each CU is split into prediction units (PUs) and predicted. The prediction error of each CU is split into transform units (TUs) and frequency-transformed, in a quadtree structure. Hereafter, a CU of the largest size is referred to as "largest CU" (largest coding unit: LCU), and a CU of the smallest size is referred to as "smallest CU" (smallest coding unit: SCU). The LCU size and the CTU size are the same.

Each CU is prediction-encoded by intra prediction or inter-frame prediction. The following describes intra prediction and inter-frame prediction.

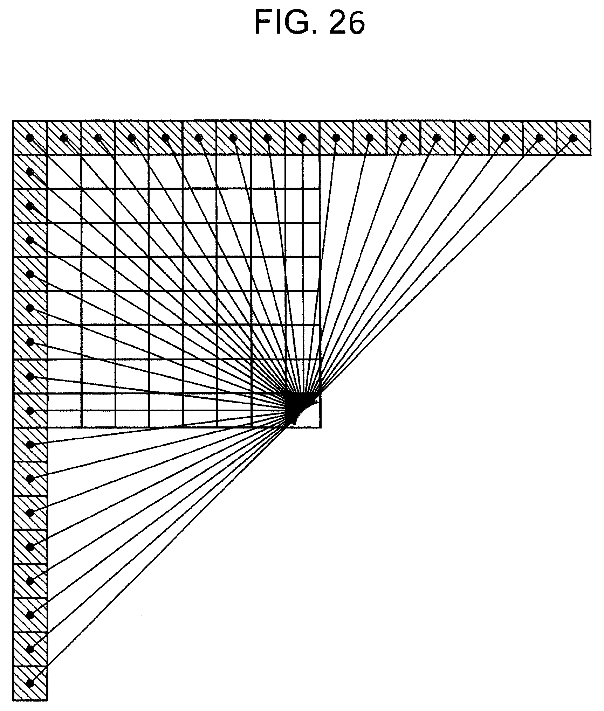

Intra prediction is prediction for generating a prediction image from a reconstructed image of a frame to be encoded. NPL 1 defines 33 types of angular intra prediction depicted in Fig. 26. In angular intra prediction, a reconstructed pixel near a block to be encoded is used for extrapolation in any of 33 directions depicted in Fig. 26, to generate an intra prediction signal. In addition to 33 types of angular intra prediction, NPL 1 defines DC intra prediction for averaging reconstructed pixels near the block to be encoded, and planar intra prediction for linear interpolating reconstructed pixels near the block to be encoded. A CU encoded based on intra prediction is hereafter referred to as "intra CU".

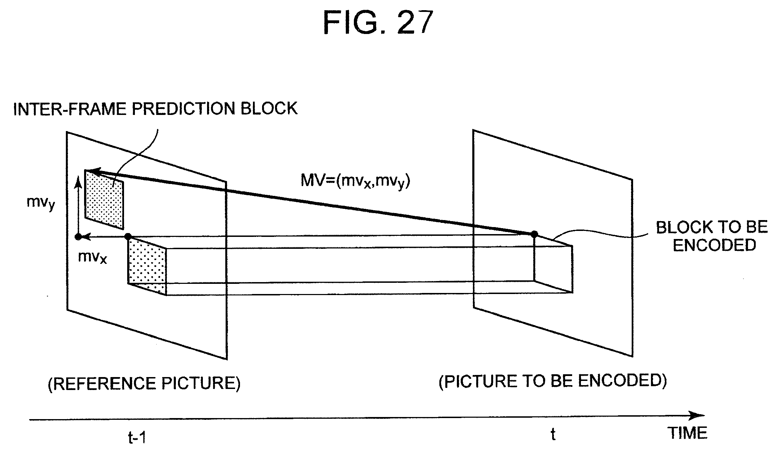

Inter-frame prediction is prediction based on an image of a reconstructed frame (reference picture) different in display time from a frame to be encoded. Inter-frame prediction is hereafter also referred to as "inter prediction". Fig. 27 is an explanatory diagram depicting an example of inter-frame prediction. A motion vector $MV = (mv_x, mv_y)$ indicates the amount of translation of a reconstructed image block of a reference picture relative to a block to be encoded. In inter prediction, an inter prediction signal is generated based on a reconstructed image block of a reference picture (using pixel interpolation if necessary). A CU encoded based on inter-frame prediction is hereafter referred to as "inter CU".

Whether a CU is an intra CU or an inter CU is signaled by pred_mode_flag syntax described in NPL 1.

A frame encoded including only intra CUs is called "I frame" (or "I picture"). A frame encoded including not only intra CUs but also inter CUs is called "P frame" (or "P picture"). A frame encoded including inter CUs that each use not only one reference picture but two reference pictures simultaneously for the inter prediction of the block is called "B frame" (or "B picture").

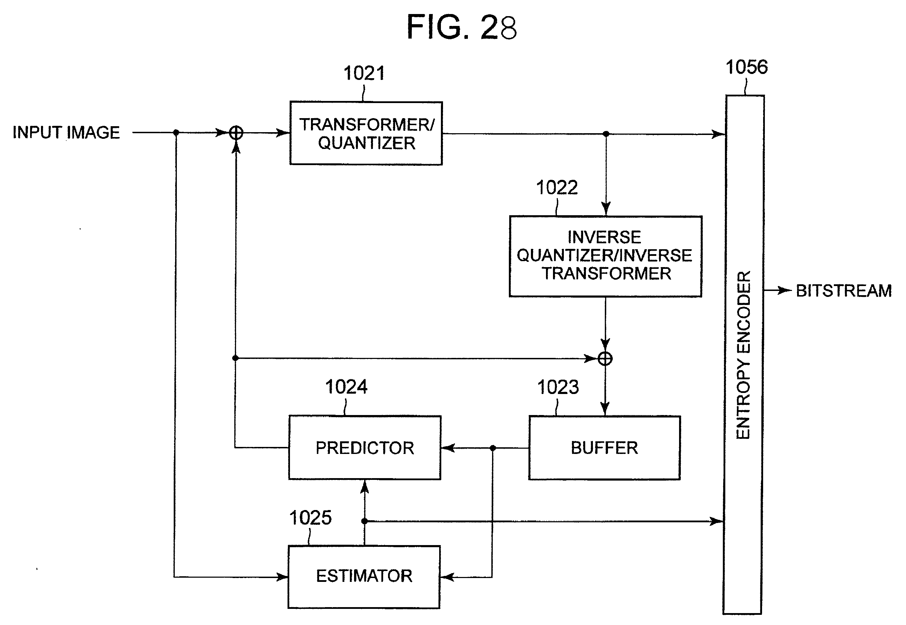

The following describes the structure and operation of a typical video encoding device that receives each CU of each frame of digitized video as an input image and outputs a bitstream, with reference to Fig. 28.

A video encoding device depicted in Fig. 28 includes a transformer/quantizer 1021, an inverse quantizer/inverse transformer 1022, a buffer 1023, a predictor 1024, and an estimator 1025.

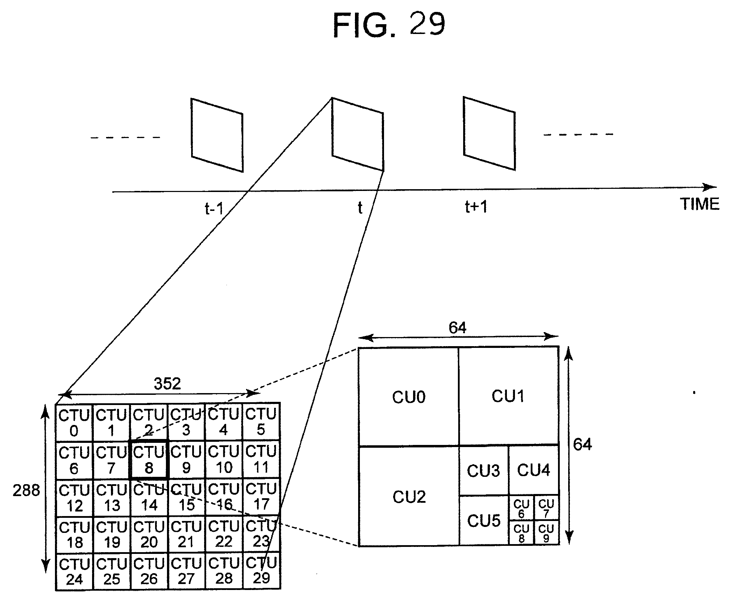

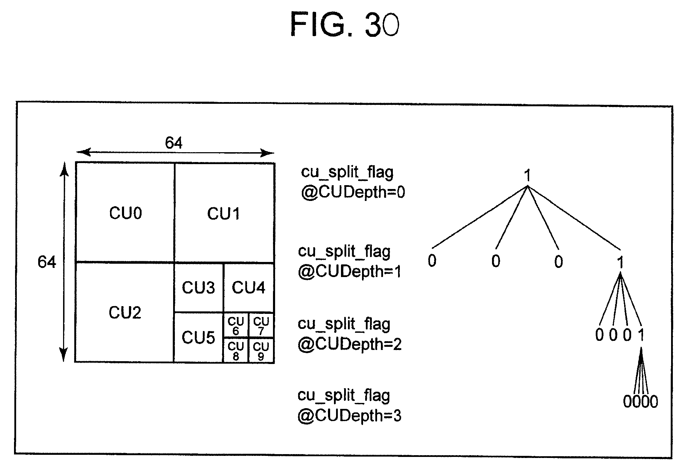

Fig. 29 is an explanatory diagram depicting an example of CTU partitioning of a frame t and an example of CU partitioning of the eighth CTU (CTU8) included in the frame t, in the case where the spatial resolution of the frame is the common intermediate format (CIF) and the CTU size is 64. Fig. 30 is an explanatory diagram depicting a quadtree structure corresponding to the example of CU partitioning of CTU8. The quadtree structure, i.e. the CU partitioning shape, of each CTU is signaled by split_cu_flag syntax described in NPL 1.

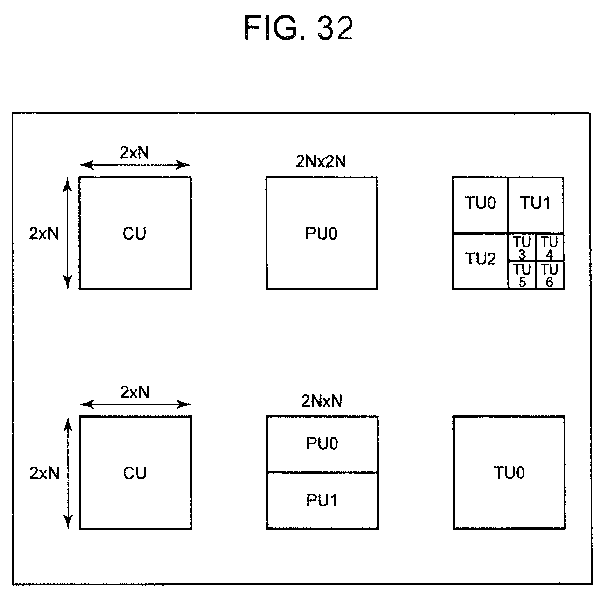

Fig. 32 is an explanatory diagram depicting PU partitioning shapes of a CU. In the case where the CU is an intra CU, square PU partitioning is selectable. In the case where the CU is an inter CU, not only square but also rectangular PU partitioning is selectable. The PU partitioning shape of each CU is signaled by part_mode syntax described in PTL 1.

Fig. 32 is an explanatory diagram depicting examples of TU partitioning of a CU. An example of TU partitioning of an intra CU having a $2N \times 2N$ PU partitioning shape is depicted in the upper part of the drawing. In the case where the CU is an intra CU, the root of the quadtree is located in the PU, and the prediction error of each PU is expressed by the quadtree structure. An example of TU partitioning of an inter CU having a $2N \times N$ PU partitioning shape is depicted in the lower part of the drawing. In the case where the CU is an inter CU, the root of the quadtree is located in the CU, and the prediction error of the CU is expressed by the quadtree structure. The quadtree structure of the prediction error, i.e. the TU partitioning shape of each CU, is signaled by split_tu_flag syntax described in NPL 1.

The estimator 1025 determines, for each CTU, a split_cu_flag syntax value for determining a CU partitioning shape that minimizes the coding cost. The estimator 1025 determines, for each CU, a pred_mode_flag syntax value for determining intra prediction/inter prediction, a part_mode syntax value for determining a PU partitioning shape, and a split_tu_flag syntax value for determining a TU partitioning shape that minimize the coding cost. The estimator 1025 determines, for each PU, an intra prediction direction, a motion vector, etc. that minimize the coding cost.

NPL 2 discloses a method of determining the split_cu_flag syntax value, the pred_mode_flag syntax value, the part_mode syntax value, the split_tu_flag syntax value, the intra prediction direction, the motion vector, etc. that minimize coding cost J based on a Lagrange multiplier λ.

The following briefly describes a decision process for the split_cu_flag syntax value, the pred_mode_flag syntax value, and the part_mode syntax value, with reference to the section 4.8.3 Intra/Inter/PCM mode decision in NPL 2.

The section discloses a CU mode decision process of determining the pred_mode_flag syntax value and the part_mode syntax value of a CU. The section also discloses a CU partitioning shape decision process of determining the split_cu_flag syntax value by recursively executing the CU mode decision process.

The CU mode decision process is described first. InterCandidate which is a set of PU partitioning shape candidates of inter prediction, IntraCandidate which is a set of PU partitioning shape candidates of intra prediction, and $J_{SSE}$(mode) which is a sum of square error (SSE) coding cost for a coding mode (mode) are defined as follows.

$$\text{InterCandidate = \{INTER\_2N×2N, INTER\_2N×N,}$$
$$\text{INTER\_N×2N, INTER\_2N×N, INTER\_N×2N, INTER\_2N×nU,}$$
$$\text{INTER\_2N×nD, INTER\_nL×2N, INTER\_nR×2N, INTER\_N×N\}}$$

$$\text{IntraCandidate = \{INTRA\_2N×2N, INTRA\_N×N\}}$$

$$J_{SSE}(\text{mode}) = D_{SSE}(\text{mode}) + \lambda_{mode} \cdot R_{mode}(\text{mode})$$

[Math. 1]

$$\lambda_{mode} = 2^{\frac{QP-12}{3}}$$

Here, $D_{SSE}$(mode) denotes the SSE of the input image signal of the CU and the reconstructed image signal obtained in the encoding using mode, $R_{mode}$(mode) denotes the number of bits of the CU generated in the encoding using mode (including the number of bits of the below-mentioned transform quantization value), and QP denotes a quantization parameter.

In the CU mode decision process, bestPUmode which is the combination of pred_mode_flag syntax and part_mode syntax that minimize the SSE coding cost $J_{SSE}$(mode) is selected from InterCandidate and IntraCandidate. The CU mode decision process can be formulated as follows.

[Math. 2]

$$bestPUmode = \arg \min_{PUmode \in PUCandidate} \{J_{SSE}(PUmode)\}$$

$$\text{PUCandidate = \{InterCandidate, IntraCandidate\}}$$

The CU partitioning shape decision process is described next.

The SSE coding cost of a CU (hereafter referred to as "node") at CUDepth is the SSE coding cost of bestPUmode of the node, as depicted in Fig. 30. The SSE coding cost $J_{SSE}$(node, CUDepth) of the node can thus be defined as follows.

[Math. 3]

$$J_{SSE}(node, CUDepth) = \min_{PUmode \in PUCandidate} \{J_{SSE}(PUmode)\}$$

The SSE coding cost of the i-th ($1 \leq i \leq 4$) child CU (hereafter referred to as "child node", "leaf", or the like) of the CU at CUDepth is the SSE coding cost of the i-th CU at CUDepth+1. The SSE coding cost $J_{SSE}$(leaf(i), CUDepth) of the i-th leaf can thus be defined as follows.

$$J_{SSE}(leaf(i), \ CUDepth) \ = \ J_{SSE}(node, \ CUDepth+1)$$

Whether or not to split the CU into four child CUs can be determined by comparing whether or not the SSE coding cost of the node is greater than the sum of the SSE coding costs of its leaves. In the case where $J_{SSE}$(node, CUDepth) is greater than the value of Expression (1) given below, the CU is split into four child CUs (split_cu_flag = 1). In the case where $J_{SSE}$(node, CUDepth) is not greater than the value of Expression (1), the CU is not split into four child CUs (split_cu_flag = 0).
[Math. 4]

$$\sum_{i=1}^{4} J_{SSE}(leaf(i), CUDepth) \qquad\qquad (1)$$

In the CU quadtree structure decision process, the above-mentioned comparison is recursively executed for each CUDepth, to determine the quadtree structure of the CTU. In other words, split_cu_flag of each leaf is determined for each CUDepth.

The estimator 1025 equally determines split_tu_flag, the intra prediction direction, the motion vector, etc., by minimizing the coding cost J based on the Lagrange multiplier A.

The predictor 1024 generates a prediction signal corresponding to the input image signal of each CU, based on the split_cu_flag syntax value, the pred_mode_flag syntax value, the part_mode syntax value, the split_tu_flag syntax value, the intra prediction direction, the motion vector, etc. determined by the estimator 1025. The prediction signal is generated based on the above-mentioned intra prediction or inter-frame prediction.

The transformer/quantizer 1021 frequency-transforms a prediction error image obtained by subtracting the prediction signal from the input image signal, based on the TU partitioning shape determined by the estimator 1025.

The transformer/quantizer 1021 further quantizes the frequency-transformed prediction error image (frequency transform coefficient). The quantized frequency transform coefficient is hereafter referred to as "transform quantization value".

The entropy encoder 1056 entropy-encodes the split_cu_flag syntax value, the pred_mode_flag syntax value, the part_mode syntax value, the split_tu_flag syntax value, the difference information of the intra prediction direction, and the difference information of the motion vector determined by the estimator 1025, and the transform quantization value.

The inverse quantizer/inverse transformer 1022 inverse-quantizes the transform quantization value. The inverse quantizer/inverse transformer 1022 further inverse-frequency-transforms the frequency transform coefficient obtained by the inverse quantization. The prediction signal is added to the reconstructed prediction error image obtained by the inverse frequency transform, and the result is supplied to the buffer 1023. The buffer 1023 stores the reconstructed image.

The typical video encoding device generates a bitstream based on the operation described above.

**Citation List**

**Patent Literatures**

    PTL 1: Japanese Patent Application Publication No. 2012-104940
    PTL 2: Japanese Patent Application Publication No. 2001-359104

**Non Patent Literatures**

NPL 1: High Efficiency Video Coding (HEVC) text specification draft 10 (for FDIS & Last Call) of ITU-T SG16 WP3 and ISO/IEC JTC1/SC29/WG11 12th Meeting: Geneva, CH, 14-23 January 2013

NPL 2: High efficiency video coding (HEVC) text specification draft 7 of ITU-T SG16 WP3 and ISO/IEC JTC1/SC29/WG11 12th Meeting: Geneva, CH, 27 April - 7 May 2012

NPL 3: ITU-T H.264 2011/06

Summary of Invention

Technical Problem

The load of all of the video encoding process for determining the split_cu_flag syntax value, the pred_mode_flag syntax value, the part_mode syntax value, the split_tu_flag syntax value, the intra prediction direction, the motion vector, etc. is concentrated at the specific estimator.

The present invention has an object of distributing the processing load in the video encoding device.

Patent Literature (PTL) 1 describes a video encoding device including a first encoding part and a second encoding part. PTL 2 describes a transcoding device including a decoder and an encoder. Neither PTL 1 nor PTL 2, however, discloses a technique for distributing the load in the video encoding device.

**Solution to Problem**

A video encoding device according to the present invention includes: first video encoding means for encoding an input image to generate first coded data; a buffer means for storing the input image; coded data transcoding/merging means for transcoding and then merging the first coded data generated by the first video encoding means, to generate second coded data; and second video encoding means for estimating a syntax value for encoding the input image stored in the buffer means based on the second coded data supplied from the coded data transcoding/merging means, to generate a bitstream, wherein the first video encoding means has a function of handling a first encoding process contained in a second encoding process handled by the second video encoding means, and wherein the coded data transcoding/merging means transcodes coded data by the first encoding process to coded data corresponding to the second encoding process.

A video encoding method according to the present invention includes: encoding an input image to generate first coded data; storing the input image in buffer means for storing the input image; transcoding and then merging the first coded data, to generate second coded data; and estimating a syntax value for encoding the input image stored in the buffer means based on the second coded data to generate a bitstream, using means having a function of handling a second encoding process that contains a first encoding process handled by means for generating the first coded data, wherein when generating the second coded data, coded data by the first encoding process is transcoded to coded data corresponding to the second encoding process.

A video encoding program according to the present invention causes a computer to execute: a process of encoding an input image to generate first coded data; a process of storing the input image in buffer means for storing the input image; a process of transcoding and then merging the first coded data, to generate second coded data; and a process of estimating a syntax value for encoding the input image stored in the buffer means based on the second coded data to generate a bitstream, by a process of handling a second encoding process that contains a first encoding process handled in the process of generating the first coded data, wherein the video encoding program causes the computer to, when generating the second coded data, transcode coded data by the first encoding process to coded data corresponding to the second encoding process.

**Advantageous Effect of Invention**

According to the present invention, the computational load of the video encoding process is distributed between the first video encoding means and the second video encoding means, so that the concentration of the load can be avoided.

**Brief Description of Drawings**

[Fig. 1] It is a block diagram depicting Exemplary Embodiment 1 of a video encoding device.
[Fig. 2] It is an explanatory diagram depicting AVC coded data.
[Fig. 3] It is an explanatory diagram for describing block addresses in a macroblock.
[Fig. 4] It is an explanatory diagram for describing prediction types.

[Fig. 5] It is an explanatory diagram for describing prediction types.

[Fig. 6] It is an explanatory diagram depicting prediction shapes of Tree in AVC.

[Fig. 7] It is an explanatory diagram depicting an HEVCCB which is HEVC coded data.

[Fig. 8] It is an explanatory diagram depicting rules for transcoding from AVC coded data of macroblocks of I_SLICE to HEVCCBs.

[Fig. 9] It is an explanatory diagram depicting rules for transcoding from AVC coded data of macroblocks of P_SLICE to HEVCCBs.

[Fig. 10] It is an explanatory diagram depicting rules for transcoding from AVC coded data of macroblocks of B_SLICE to HEVCCBs.

[Fig. 11] It is an explanatory diagram depicting an example of HEVCCBs.

[Fig. 12] It is an explanatory diagram depicting an example of HEVCCBs.

[Fig. 13] It is a flowchart depicting the operation of the video encoding device in Exemplary Embodiment 1.

[Fig. 14] It is a block diagram depicting Exemplary Embodiment 2 of a video encoding device.

[Fig. 15] It is a flowchart depicting the operation of the video encoding device in Exemplary Embodiment 2.

[Fig. 16] It is a block diagram depicting Exemplary Embodiment 3 of a video encoding device.

[Fig. 17] It is a flowchart depicting the operation of the video encoding device in Exemplary Embodiment 3.

[Fig. 18] It is an explanatory diagram depicting an example of screen division.

[Fig. 19] It is a block diagram depicting a video encoding device for processing divided screens in parallel.

[Fig. 20] It is a block diagram depicting a video encoding device for transcoding an input bitstream.

[Fig. 21] It is a block diagram depicting a structural example of an information processing system capable of realizing the functions of a video encoding device according to the present invention.

[Fig. 22] It is a block diagram depicting main parts of a video encoding device according to the present invention.

[Fig. 23] It is a block diagram depicting main parts of another video encoding device according to the present invention.

[Fig. 24] It is a block diagram depicting main parts of another video encoding device according to the present invention.

[Fig. 25] It is a block diagram depicting main parts of another video encoding device according to the present invention.

[Fig. 26] It is an explanatory diagram depicting an example of 33 types of angular intra prediction.

[Fig. 27] It is an explanatory diagram depicting an example of inter-frame prediction.

[Fig. 28] It is an explanatory diagram depicting the structure of a typical video encoding device.

[Fig. 29] It is an explanatory diagram depicting an example of CTU partitioning of a frame t and an example of CU partitioning of CTU8 of the frame t.

[Fig. 30] It is an explanatory diagram depicting a quadtree structure corresponding to the example of CU partitioning of CTU8.

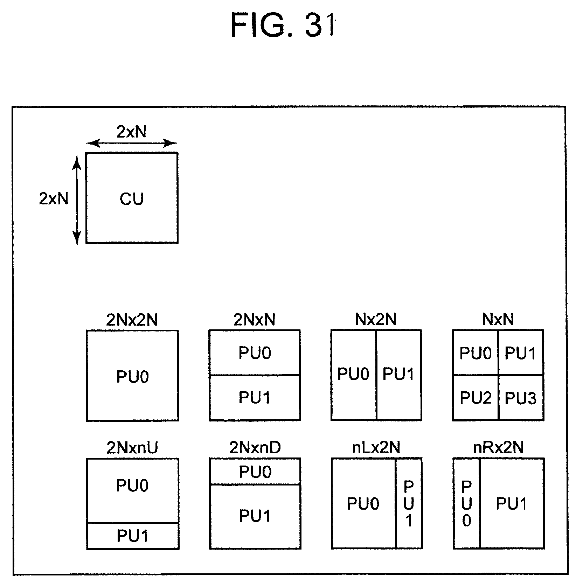

[Fig. 31] It is an explanatory diagram depicting examples of PU partitioning of a CU.

[Fig. 32] It is an explanatory diagram depicting examples of TU partitioning of a CU.

## DESCRIPTION OF THE PREFERRED EMBODIMENTS

Exemplary Embodiment 1

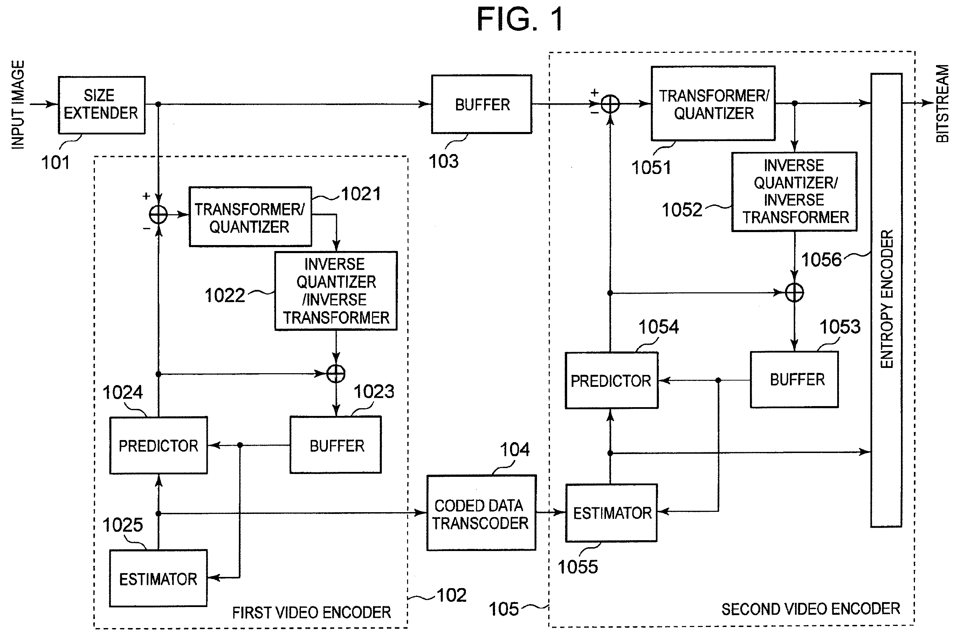

Fig. 1 is a block diagram depicting the structure of a video encoding device in this exemplary embodiment. In the video encoding device depicted in Fig. 1, a first video encoder 102 is an Advanced Video Coding (AVC) video encoder that supports macroblocks equivalent to CTUs of 16×16 pixel LCU size, and a second video encoder 105 is an HEVC video encoder that supports not only 16×16 pixel CTUs but also 32×32 pixel CTUs and 64x64 pixel CTUs. In other words, the largest LCU size that can be supported by the first video encoder 102 is less than or equal to the largest LCU size that can be supported by the second video encoder 105.

The video encoding device in this exemplary embodiment includes a size extender 101, the first video encoder 102, a buffer 103, a coded data transcoder 104, and the second video encoder 105.

The size extender 101 size-extends the width src_pic_width and height src_pic_height of an input image src to a multiple of 16. For example, in the case where (src_pic_width, src_pic_height) = (1920, 1080), the extended width e_src_pic_width and height e_src_pic_height of the input image are (e_src_pic_width, e_src_pic_height) = (1920, 1088). A pixel value in a size-extended area may be a copy of a pixel value of a boundary of the input image or a predetermined pixel value (e.g. 128 representing gray).

The size extender 101 supplies the size-extended input image to the first video encoder 102 and the buffer 103. The first video encoder 102 encodes the size-extended input image according to AVC.

The following describes the structure and operation of the first video encoder 102.

The first video encoder 102 includes a transformer/quantizer 1021, an inverse quantizer/inverse transformer 1022, a buffer 1023, a predictor 1024, and an estimator (first estimator) 1025.

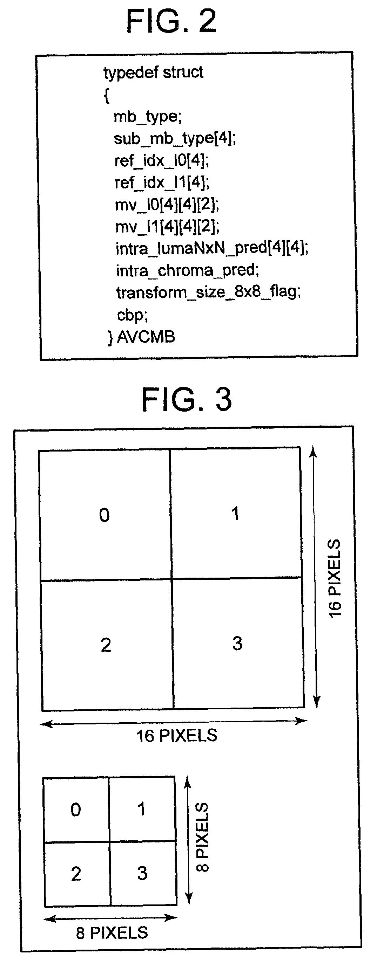

The estimator 1025 determines AVC coded data of each macroblock constituting the size-extended input image, using the size-extended input image and a reconstructed image stored in the buffer 1023. In this specification, AVC coded data (AVCMB) includes coded data (mb_type, sub_mb_type, ref_idx_10, ref_idx_11, mv_10, mv_11, intra_lumaN×N_pred, transform_size_8×8_flag) other than a DCT coefficient of a 16×16 pixel area corresponding to a macroblock, as depicted in Fig. 2. Here, mb_type and sub_mb_type respectively indicate a coding mode of a macroblock defined in Table 7-11, Table 7-13, and Table 7-14 in NPL 3 and a coding mode of a sub-macroblock defined in Table 7-17 and Table 7-18 in NPL 3. Moreover, ref_idx_lx (x = 0/1), mv_lx, intra_lumaN×N_pred, and transform_size_8×8_flag respectively indicate a reference picture index of a reference picture list x, a motion vector of the reference picture list x, a luminance intra prediction direction, and a flag of whether or not the macroblock is encoded using 8×8 DCT.

Given that the macroblock is 16×16 pixels as mentioned above and the smallest processing unit in AVC is 4×4 pixels, the position of each piece of AVC coded data in each macroblock is defined by a combination of a 16×16 block address b8 (0 ≤ b8 ≤ 3) in the macroblock (the upper part in Fig. 3) and a block address b4 (0 ≤ b4 ≤ 3) in the 8×8 block (the lower part in Fig. 3). For example, intra_lumaN×N_pred at the position (x, y) = (4, 4) in the macroblock corresponds to (b8, b4) = (0, 1), and can be stored in intra_lumaN×N_pred [0] [3].

The estimator 1025 outputs the determined AVC coded data of each macroblock to the predictor 1024 and the coded data transcoder 104.

The predictor 1024 generates a prediction signal corresponding to the size-extended input image signal of each macroblock, based on the mb_type syntax value, the sub_mb_type syntax value, the ref_idx_10 syntax value, the ref_idx_l1 syntax value, the mv_10 syntax value, the mv_11 syntax value, and the intra_lumaN×N_pred syntax value determined by the estimator 1025. The prediction signal is generated based on the above-mentioned intra prediction or inter-frame prediction.

Regarding intra prediction in AVC, intra prediction modes of three block sizes, i.e. Intra_4×4, Intra_8×8, and Intra_16×16, defined by mb_type are available, as described in NPL 3.

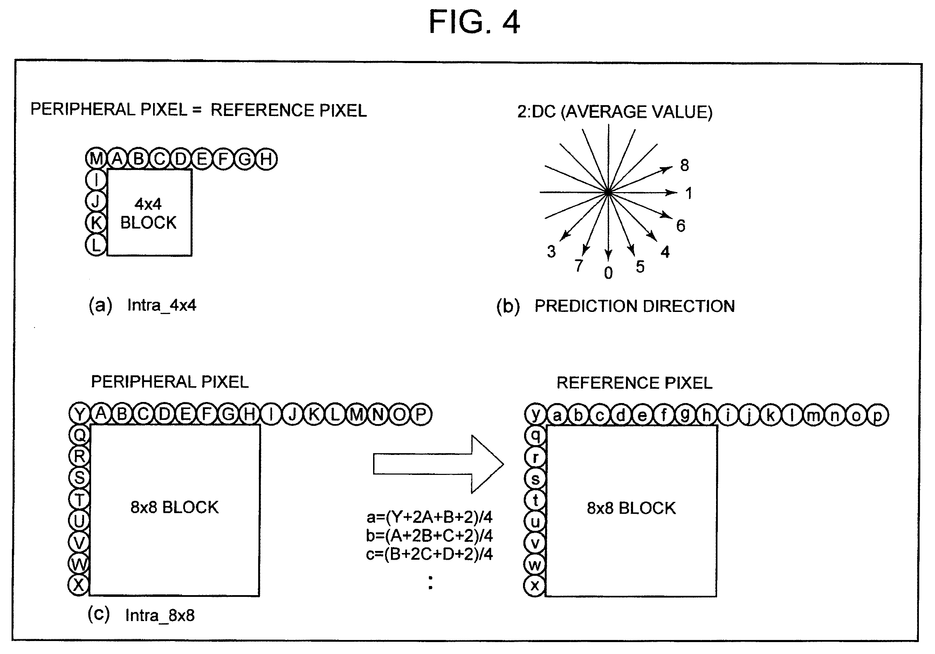

Intra_4×4 and Intra_8×8 are respectively intra prediction of 4×4 block size and 8×8 block size, as can be understood from (a) and (c) in Fig. 4. Each circle (o) in the drawing represents a reference pixel for intra prediction, i.e. the reconstructed image stored in the buffer 1023.

In intra prediction of Intra_4×4, peripheral pixels of the reconstructed image are directly set as reference pixels, and used for padding (extrapolation) in nine directions depicted in (b) in Fig. 4 to form the prediction signal. In intra prediction of Intra_8×8, pixels obtained by smoothing peripheral pixels of the reconstructed image by low-pass filters (1/2, 1/4, 1/2) depicted directly below the right arrow in (c) in Fig. 4 are set as reference signals, and used for extrapolation in the nine directions depicted in (b) in Fig. 4 to form the prediction signal.

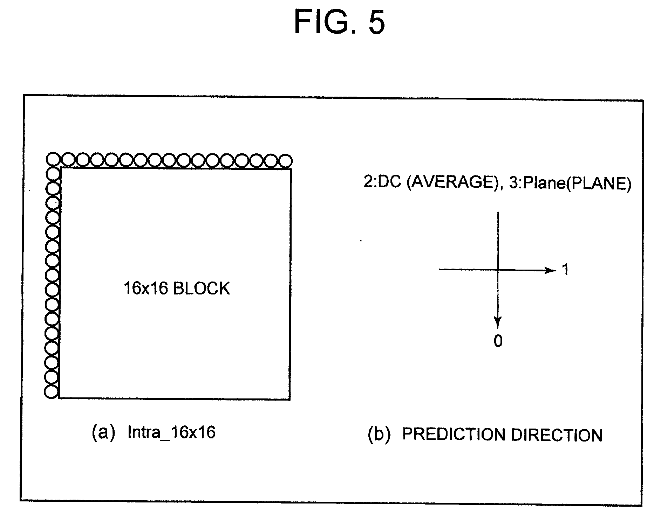

Intra_16×16 is intra prediction of 16×16 block size, as can be understood from (a) in Fig. 5. Each circle (o) in Fig. 5 represents a reference pixel for intra prediction, i.e. the reconstructed image stored in the buffer 1023, as in the example depicted in Fig. 4. In intra prediction of Intro_16×16, peripheral pixels of the reconstructed image are directly set as reference pixels, and used for extrapolation in four directions depicted in (b) in Fig. 5 to form the prediction signal.

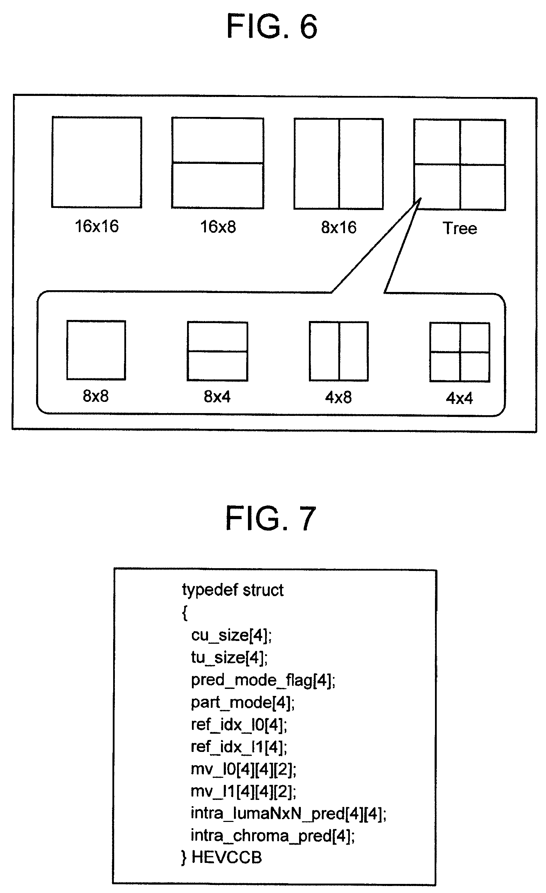

Regarding inter-frame prediction in AVC, 16×16, 16x8, 8×16, and Tree prediction shapes defined by mb_type are available, as depicted in Fig. 6. In the case where the macroblock is Tree, each 8×8 sub-macroblock has a prediction shape of any of 8×8, 8×4, 4×8, and 4×4 defined by sub_mb_type. It is assumed in this specification that, in the case where mb_type is Tree (P_8×8 or B_8×8), each 8x8 sub-macroblock is limited only to 8x8, for simplicity's sake.

The transformer/quantizer 1021 frequency-transforms a prediction error image obtained by subtracting the prediction signal from the size-extended input image signal, based on the mb_type syntax value and the transform_size_8×8_flag syntax value determined by the estimator 1025.

The transformer/quantizer 1021 further quantizes the frequency-transformed prediction error image (frequency transform coefficient). The quantized frequency transform coefficient is hereafter referred to as "transform quantization value".

The inverse quantizer/inverse transformer 1022 inverse-quantizes the transform quantization value. The inverse quantizer/inverse transformer 1022 further inverse-frequency-transforms the frequency transform coefficient obtained by the inverse quantization. The prediction signal is added to the reconstructed prediction error image obtained by the inverse frequency transform, and the result is supplied to the buffer 1023. The buffer 1023 stores the reconstructed image.

Based on the operation described above, the first video encoder 102 encodes the size-extended input image signal.

The coded data transcoder 104 transcodes the AVCMB of each macroblock to an HEVCCB which is HEVC coded data (cu_size, tu_size, pred_mode_flag, part_mode, ref_idx_10, ref_idx_11, mv_10, mv_l1, intra_lumaN×N_pred, intra_chroma_pred) of a 16×16 pixel area corresponding to the macroblock, as depicted in Fig. 7. Here, cu_size and tu_size respectively indicate CU size and TU size.

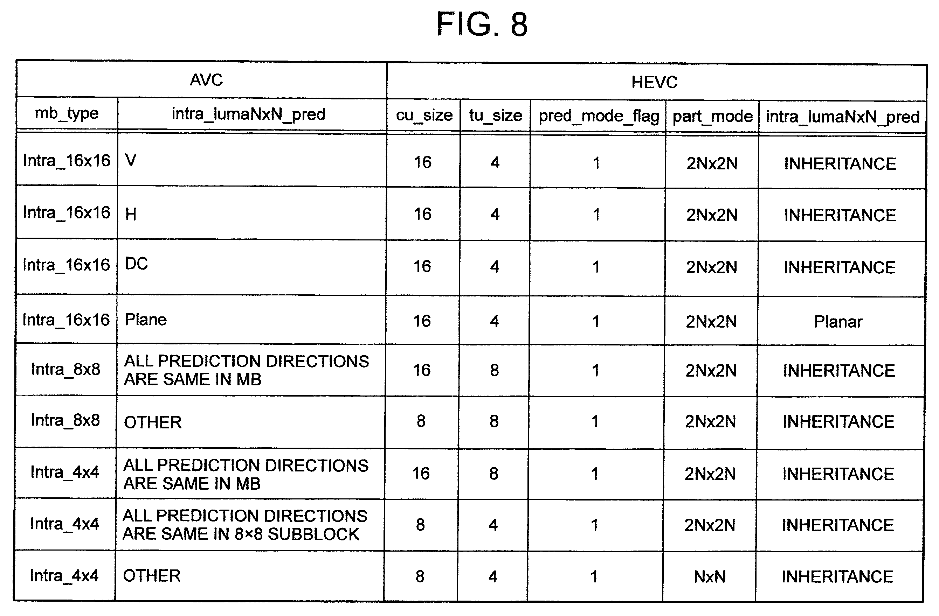

In Figs. 8 to 10, V demotes the vertical direction, and H denotes the horizontal direction. Each row indicates a transcoding rule for the corresponding mb_type and intra_lumaN×N_pred.

Given that the smallest LCU size is 16×16 pixels, the smallest SCU size is 8×8 pixels, and the smallest processing unit is 4×4 pixels in HEVC, HEVC coded data can be managed in units of 16×16 pixels. The position of HEVC coded data in 16x16 pixels can be defined by a combination of a $8 \times 8$ block address b8 ($0 \le b8 \le 3$) in the macroblock and a block address b4 ($0 \le b4 \le 3$) in the $8 \times 8$ block, as with AVC coded data.

For example, in the case where the CU size is 16, cu_size[b8] ($0 \le b8 \le 3$) of HEVC coded data in $16 \times 16$ pixels are all 16.

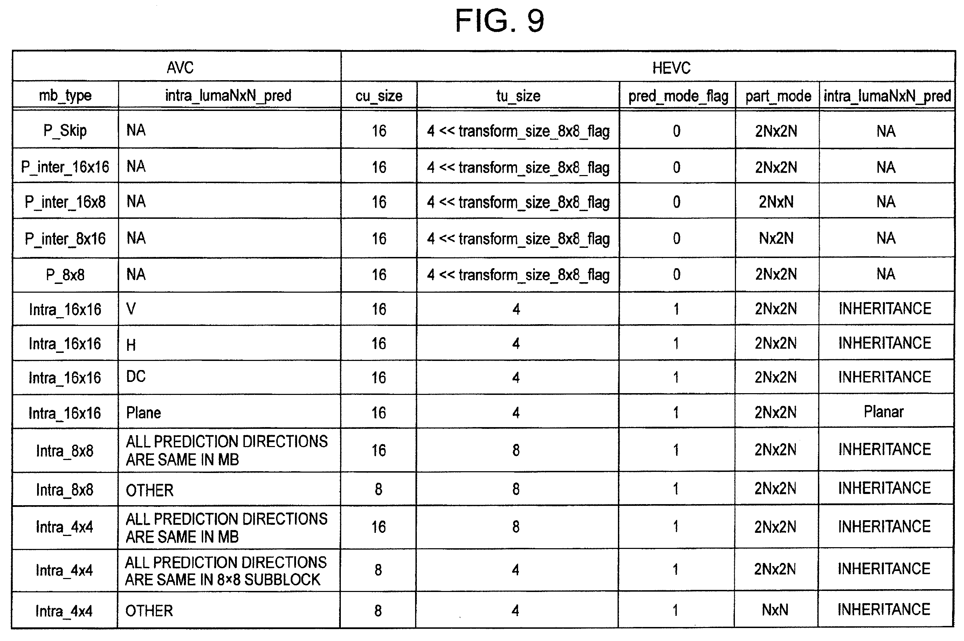

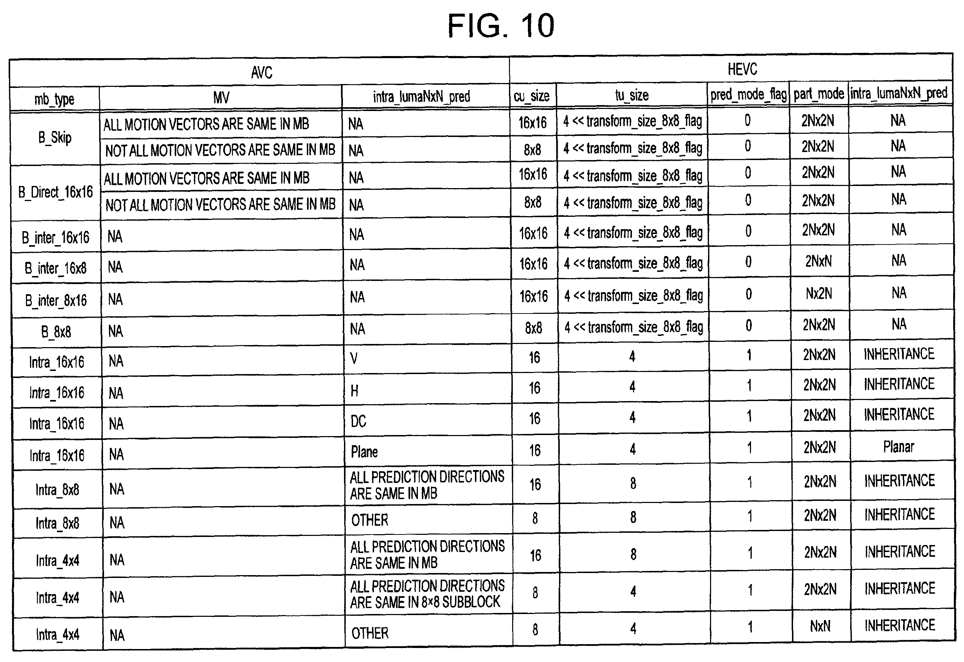

I_SLICE mapping depicted in Fig. 8, P_SLICE mapping depicted in Fig. 9, and B_SLICE mapping depicted in Fig. 10 each indicate rules for mapping (transcoding) AVCMBs to HEVCCBs by the coded data transcoder 104, depending on picture type.

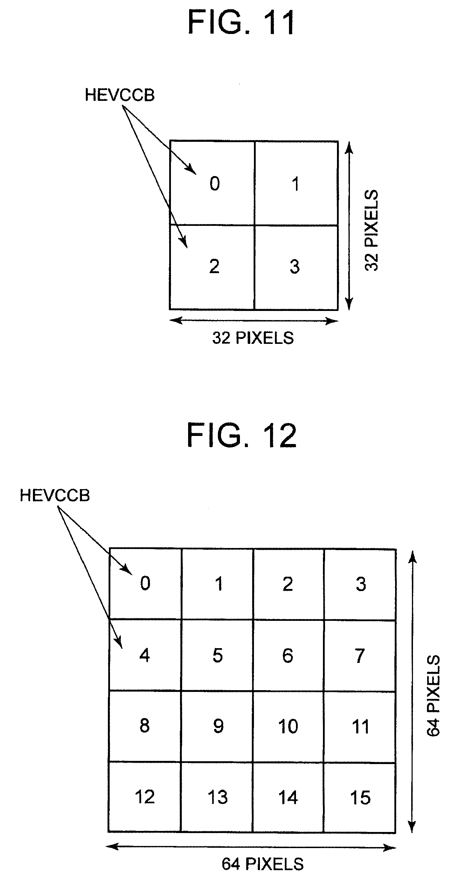

Next, in the case where part_mode of all adjacent four HEVCCBs depicted in Fig. 11 are 2N×2N and all of the HEVCCBs have the same cu_size, pred_mode_flag, and motion information (ref_idx_10, ref_idx_11, mv_10, and mv_l1), the coded data transcoder 104 merges the four HEVCCBs. In detail, the coded data transcoder 104 updates cu_size of the four HEVCCBs to 32.

Further, in the case where part_mode of all adjacent 16 HEVCCBs depicted in Fig. 12 are 2Nx2N and all of the HEVCCBs have the same cu_size, pred_mode_flag, and motion information (ref_idx_10, ref_idx_l1, mv_10, and mv_l1), the coded data transcoder 104 merges the 16 HEVCCBs. In detail, the coded data transcoder 104 updates cu_size of the 16 HEVCCBs to 64.

The second video encoder 105 encodes, according to HEVC, the size-extended input image supplied from the buffer 103 based on the HEVC coded data supplied from the coded data transcoder 104, and outputs a bitstream. The second video encoder 105 in this exemplary embodiment sets the input image src not to a multiple of the SCU but to a multiple of the macroblock size of the first video encoder 102, in order to enhance the reliability of the coded data of the first video encoder 102 for image boundaries.

The following describes the structure and operation of the second video encoder 105.

The second video encoder 105 includes a transformer/quantizer 1051, an inverse quantizer/inverse transformer 1052, a buffer 1053, a predictor 1054, an estimator (second estimator) 1055, and an entropy encoder 1056.

The estimator 1055 in the second video encoder 105 in this exemplary embodiment can determine split_cu_flag for each CTU, according to cu_size of the HEVC coded data. For example, in the case where cu_size = 64, split_cu_flag at CUDepth = 0 is set to 0. Likewise, the estimator 1055 can determine the intra prediction/inter prediction and PU partitioning shape of each CU, according to pred_mode_flag and part_mode of the HEVC coded data. The estimator 1055 can also determine the intra prediction direction, motion vector, etc. of each PU, according to pred_mode_flag and part_mode of the HEVC coded data. Thus, the estimator 1055 does not need to exhaustively search for the coding parameters that minimize the coding cost J based on the Lagrange multiplier A, unlike the estimator in the background art.

The predictor 1054 generates a prediction signal corresponding to the input image signal of each CU, based on the split_cu_flag syntax value, the pred_mode_flag syntax value, the part_mode syntax value, the split_tu_flag syntax value, the intra prediction direction, the motion vector, etc. determined by the estimator 1055. The prediction signal is generated based on the above-mentioned intra prediction or inter-frame prediction.

The transformer/quantizer 1051 frequency-transforms a prediction error image obtained by subtracting the prediction signal from the input image signal, based on the TU partitioning shape determined by the estimator 1055 according to tu_size of the HEVC coded data.

The transformer/quantizer 1051 further quantizes the frequency-transformed prediction error image (frequency transform coefficient).

The entropy encoder 1056 entropy-encodes the split_cu_flag syntax value, the pred_mode_flag syntax value, the part_mode syntax value, the split_tu_flag syntax value, the difference information of the intra prediction direction, and the difference information of the motion vector determined by the estimator 1055, and the transform quantization value.

The inverse quantizer/inverse transformer 1052 inverse-quantizes the transform quantization value. The inverse quantizer/inverse transformer 1052 further inverse-frequency-transforms the frequency transform coefficient obtained by the inverse quantization. The prediction signal is added to the reconstructed prediction error image obtained by the inverse frequency transform, and the result is supplied to the buffer 1053. The buffer 1053 stores the reconstructed image.

Based on the operation described above, the second video encoder 105 encodes, according to HEVC, the size-extended input image supplied from the buffer 103 based on the HEVC coded data supplied from the coded data transcoder 104, and outputs a bitstream.

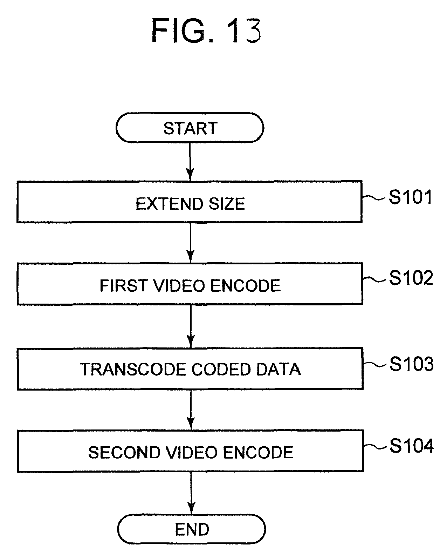

The following describes the operation of the video encoding device in this exemplary embodiment, with reference to a flowchart in Fig. 13.

In step S101, the size extender 101 size-extends the input image to a multiple of 16 which is the macroblock size of the first video encoder 102.

In step S102, the first video encoder 102 encodes the size-extended input image according to AVC.

In step S103, the coded data transcoder 104 transcodes the AVCMB of each macroblock of the size-extended input image to the HEVCCB, and further merges

HEVCCBs.

In step S104, the second video encoder 105 encodes, according to HEVC, the size-extended input image supplied from the buffer 103 based on the HEVC coded data supplied from the coded data transcoder 104, and outputs a bitstream.

In the video encoding device in this exemplary embodiment described above, the load of the video encoding process for determining the split_cu_flag syntax value, the pred_mode_flag syntax value, the part_mode syntax value, the split_tu_flag syntax value, the intra prediction direction, the motion vector, etc. is distributed between the first video encoder 102 and the second video encoder 105, thus reducing the concentration of the load of the video encoding process.

Though the first video encoder 102 is an AVC video encoder in this exemplary embodiment, the AVC video encoder is an example. The first video encoder 102 may be an HEVC video encoder supporting 16×16 pixel CTUs. In this case, the coded data transcoder 104 skips the above-mentioned process of transcoding AVC coded data to HEVC coded data.

Moreover, in the case where adjacent four HEVCCBs satisfy all of the following 32x32 2NxN conditions, the coded data transcoder 104 in this exemplary embodiment may update cu_size and part_mode of the four HEVCCBs respectively to 32 and 2N×N.

[32×32 2N×N conditions]

- part_mode of all HEVCCBs are 2Nx2N.
- cu_size of all HEVCCBs are the same.
- pred_mode_flag of all HEVCCBs are 0.
- The motion information of all HEVCCBs are not the same.
- The motion information of upper two HEVCCBs are the same.
- The motion information of lower two HEVCCBs are the same.

Likewise, in the case where adjacent four HEVCCBs satisfy all of the following 32×32 N×2N conditions, the coded data transcoder 104 in this exemplary embodiment may update cu_size and part_mode of the four HEVCCBs respectively to 32 and N×2N.

[32×32 N×2N conditions]

- part_mode of all HEVCCBs are 2N×2N.
- cu_size of all HEVCCBs are the same.
- pred_mode_flag of all HEVCCBs are 0.
- The motion information of all HEVCCBs are not the same.
- The motion information of left two HEVCCBs are the same.
- The motion information of right two HEVCCBs are the same.

Further, in the case where adjacent 16 HEVCCBs satisfy all of the following 64×64 2N×N conditions, the coded data transcoder 104 in this exemplary embodiment may update cu_size and part_mode of the 16 HEVCCBs respectively to 64 and 2N×N.

[64×64 2N×N conditions]

- part_mode of all HEVCCBs are 2N×2N.
- cu_size of all HEVCCBs are the same.
- pred_mode_flag of all HEVCCBs are 0.
- The motion information of all HEVCCBs are not the same.
- The motion information of upper eight HEVCCBs are the same.
- The motion information of lower eight HEVCCBs are the same.

Likewise, in the case where adjacent 16 HEVCCBs satisfy all of the following 64×64 N×2N conditions, the coded data transcoder 104 in this exemplary embodiment may update cu_size and part_mode of the 16 HEVCCBs respectively to 64 and N×2N.

[64×64 N×2N conditions]

- part_mode of all HEVCCBs are 2N×2N.
- cu_size of all HEVCCBs are the same.
- pred_mode_flag of all HEVCCBs are 0.
- The motion information of all HEVCCBs are not the same.
- The motion information of left eight HEVCCBs are the same.
- The motion information of right eight HEVCCBs are the same.

Exemplary Embodiment 2

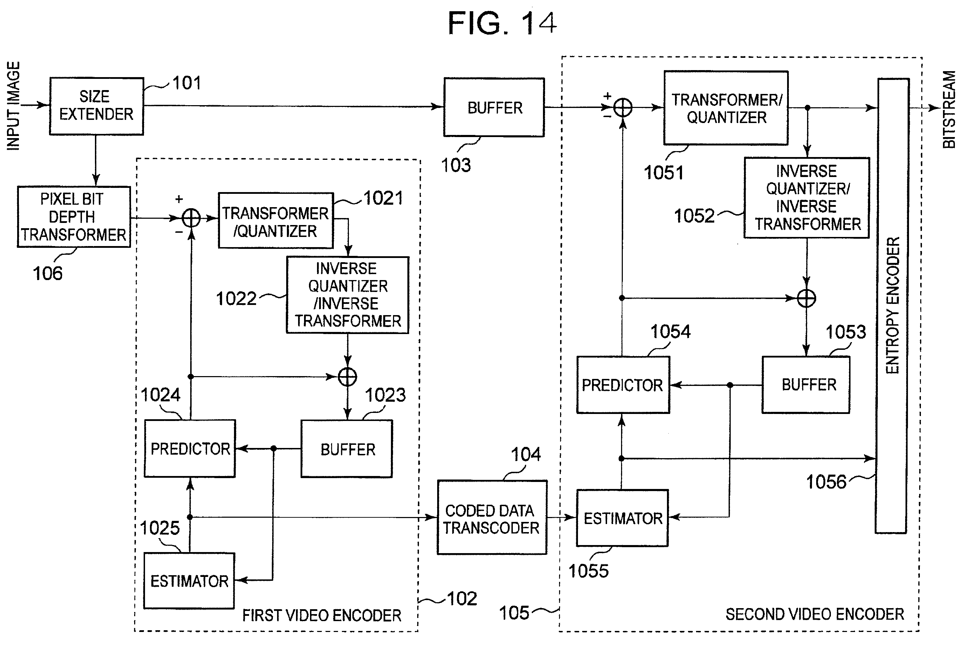

Fig. 14 is a block diagram depicting the structure of a video encoding device in Exemplary Embodiment 2 supporting 4:2:0 10-bit input format, where a first video encoder 102 is an AVC video encoder supporting 4:2:0 8-bit input format and a second video encoder 105 is an HEVC video encoder.

The video encoding device in this exemplary embodiment includes a size extender 101, a pixel bit depth transformer 106, the first video encoder 102, a buffer 103, a coded data transcoder 104, and the second video encoder 105.

The size extender 101 size-extends the width src_pic_width and height src_pic_height of a 4:2:0 10-bit input image src to a multiple of 16. For example, in the case where (src_pic_width, src_pic_height) = (1920, 1080), the extended width e_src_pic_width and height e_src_pic_height of the input image are (e_src_pic_width, e_src_pic_height) = (1920, 1088). A pixel value in a size-extended area may be a copy of a pixel value of a boundary of the input image or a predetermined pixel value (e.g. 512 representing gray).

The pixel bit depth transformer 106 transforms the 4:2:0 10-bit input image size-extended to a multiple of 16, which is supplied from the size extender 101, to 4:2:0 8-bit. In the bit depth transformation, the 2 LSBs may be dropped by right shift, or subjected to rounding.

The first video encoder 102 encodes the input image size-extended to a multiple of 16 and transformed to 4:2:0 8-bit according to AVC, as in Exemplary Embodiment 1.

The coded data transcoder 104 transcodes the AVC coded data of each macroblock of the input image size-extended to a multiple of 16 and transformed to 4:2:0 8-bit, which is supplied from the pixel bit depth transformer 106, to an HEVCCB.

Next, in the case where part_mode of all adjacent four HEVCCBs are 2N×2N and all of the HEVCCBs have the same cu_size, pred_mode_flag, and motion information (ref_idx_10, ref_idx_l1, mv_10, and mv_l1), the coded data transcoder 104 merges the four HEVCCBs, as in Exemplary Embodiment 1.

Further, in the case where part_mode of all adjacent 16 HEVCCBs are 2N×2N and all of the HEVCCBs have the same cu_size, pred_mode_flag, and motion information (ref_idx_10, ref_idx_l1, mv_10, and mv_l1), the coded data transcoder 104 merges the 16 HEVCCBs, as in Exemplary Embodiment 1.

The second video encoder 105 encodes, according to HEVC, the 4:2:0 10-bit input image src extended to a multiple of 16 and supplied from the buffer 103 based on the HEVC coded data supplied from the coded data transcoder 104, and outputs a bitstream, as in Exemplary Embodiment 1.

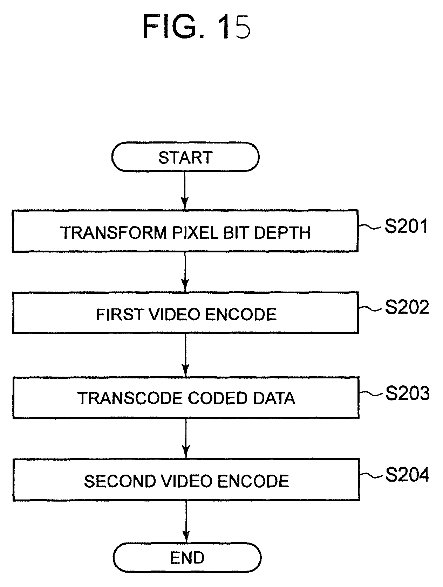

The following describes the operation of the video encoding device in this exemplary embodiment, with reference to a flowchart in Fig. 15.

In step S201, the pixel bit depth transformer 106 transforms the 4:2:0 10-bit input image size-extended to a multiple of 16, which is supplied from the size extender 101, to 4:2:0 8-bit.

In step S202, the first video encoder 102 encodes the input image size-extended to a multiple of 16 and transformed to 4:2:0 8-bit, according to AVC.

In step S203, the coded data transcoder 104 transcodes the AVCMB of each macroblock of the input image size-extended to a multiple of 16 and transformed to 4:2:0 8-bit to the HEVCCB, and merges HEVCCBs.

In step S204, the second video encoder 105 encodes, according to HEVC, the 4:2:0 10-bit input image extended to a multiple of 16 and supplied from the buffer 103 based on the HEVC coded data supplied from the coded data transcoder 104, and outputs a bitstream.

Based on the operation described above, the video encoding device in this exemplary embodiment generates a bitstream for 4:2:0 10-bint input format.

In the video encoding device in this exemplary embodiment described above, the load of the video encoding process for determining the split_cu_flag syntax value, the pred_mode_flag syntax value, the part_mode syntax value, the split_tu_flag syntax value, the intra prediction direction, the motion vector, etc. is distributed between the first video encoder 102 and the second video encoder 105, thus reducing the concentration of the load of the video encoding process.

Though the first video encoder 102 is an AVC video encoder supporting 4:2:0 8-bit input format in this exemplary embodiment, the AVC video encoder is an example. The first video encoder 102 may be an HEVC video encoder supporting 4:2:0 8-bit input format. In this case, the coded data transcoder 104 skips the above-mentioned process of transcoding AVC coded data to HEVC coded data and merging process for HEVC coded data.

Though the pixel bit depth transformer 106 reduces the pixel bit depth of the input image size-extended to a multiple of 16 and supplied from the size extender 101 in this exemplary embodiment, the pixel bit depth transformer 106 may reduce the pixel bit depth of the input image input to the video encoding device. The pixel bit depth transformer 106 is omitted in such a case.

Exemplary Embodiment 3

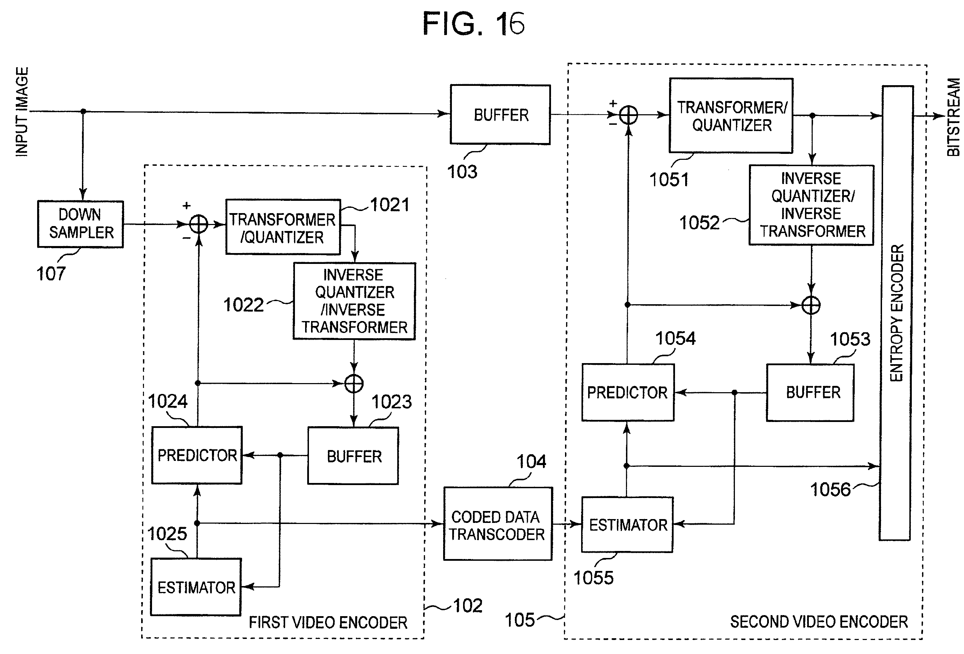

Fig. 16 is a block diagram depicting the structure of a video encoding device in Exemplary Embodiment 3 supporting 2160p (4K) input format of the high definition television (HDTV) standard. In Exemplary Embodiment 3, a first video encoder 102 is an AVC video encoder supporting 1080p (2K) input format, and a second video encoder 105 is an HEVC video encoder. In other words, the spatial resolution that can be supported by the first video encoder 102 is less than the spatial resolution in the second video encoder 105.

The video encoding device in this exemplary embodiment includes a down sampler 107, the first video encoder 102, a buffer 103, a coded data transcoder 104, and the second video encoder 105.

The down sampler 107 reduces a 2160p input image src (src_pic_width = 3840, src_pic_height = 2160) to 1080p (src_pic_width = 1920, src_pic_height = 1080). The down sampler 107 further extends the width src_pic_width and height src_pic_height of the input image reduced to 1080p, to a multiple of 16. A pixel value in an extended area may be a copy of a pixel value of a boundary of the input image reduced to 1080p, or a predetermined pixel value (e.g. 128 representing gray (in the case where the input image is an 8-bit image)).

The first video encoder 102 encodes the input image reduced to 1080p and extended to a multiple of 16, which is supplied from the down sampler 107, according to AVC, as in Exemplary Embodiment 1

The coded data transcoder 104 transcodes the AVC coded data of each macroblock of the input image reduced to 1080p and extended to a multiple of 16, which is supplied from the down sampler 107, to an HEVCCB, as in Exemplary Embodiment 1. Here, the coded data transcoder 104 in this exemplary embodiment doubles cu_size, tu_size, and the horizontal component value and vertical component value of the motion vector of the motion information, given that the input image to the first video encoder 102 is half in horizontal resolution and vertical resolution with respect to the input image to the second video encoder 105.

Next, in the case where part_mode of all adjacent four HEVCCBs are 2N×2N and all of the HEVCCBs have the same cu_size, pred_mode_flag, and motion information (ref_idx_10, ref_idx_l1, mv_10, and mv_l1), the coded data transcoder 104 merges the four HEVCCBs, as in Exemplary Embodiment 1. In detail, the coded data transcoder 104 updates cu_size of the four HEVCCBs to 64, given that the input image to the first video encoder 102 is half in horizontal resolution and vertical resolution with respect to the input image to the second video encoder 105.

The second video encoder 105 encodes, according to HEVC, the 2160p input image supplied from the buffer 103 based on the HEVC coded data supplied from the coded data transcoder 104, and outputs a bitstream, as in Exemplary Embodiment 1.

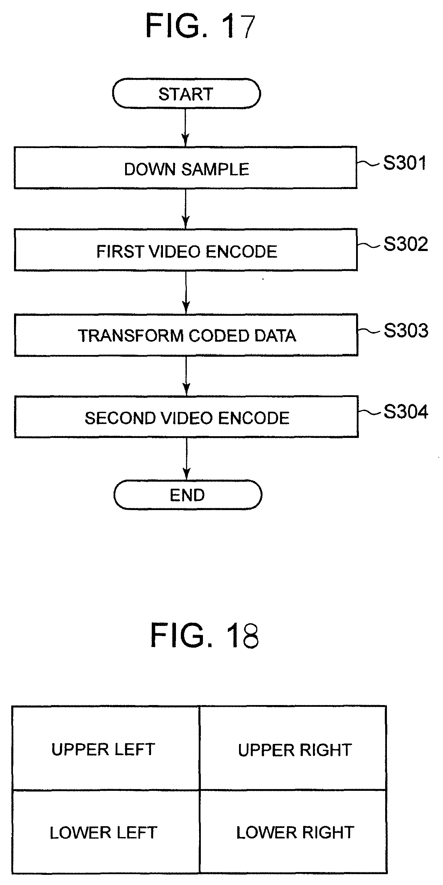

The following describes the operation of the video encoding device in this exemplary embodiment, with reference to a flowchart in Fig. 17.

In step S301, the down sampler 107 reduces the 2160p input image to 1080p, and size-extends the width and height of the input image reduced to 1080p, to a multiple of 16.

In step S302, the first video encoder 102 encodes the input image reduced to 1080p and extended to a multiple of 16, which is supplied from the down sampler 107, according to AVC.

In step S303, the coded data transcoder 104 transcodes the AVC coded data of each macroblock of the input image reduced to 1080p and extended to a multiple of 16, which is supplied from the down sampler 107, to the HEVCCB, and further merges HEVCCBs.

In step S304, the second video encoder 105 encodes, according to HEVC, the 2160p input image supplied from the buffer 103 based on the HEVC coded data supplied from the coded data transcoder 104, and outputs a bitstream.

In the video encoding device in this exemplary embodiment described above, the load of the video encoding process for determining the split_cu_flag syntax value, the pred_mode_flag syntax value, the part_mode syntax value, the split_tu_flag syntax value, the intra prediction direction, the motion vector, etc. is distributed between the first video encoder 102 and the second video encoder 105, thus reducing the concentration of the load of the video encoding process.

The second video encoder 105 in this exemplary embodiment may further search for a motion vector in a range of ±1 around the motion vector of the HEVC coded data, given that the horizontal component value and vertical component value of the motion vector are doubled.

Moreover, the second video encoder 105 in this exemplary embodiment may encode the 2160p input image src not with a multiple of the SCU but with a multiple of the macroblock size (a multiple of 32) of the first video encoder 102, in order to enhance the reliability of the coded data of the first video encoder 102 for image boundaries.

Though the video encoding device supporting 2160p (4K) input format is described as an example in this exemplary embodiment, 4320p (8K) input format can also be supported by the same structure. In this case, when transcoding the AVC coded data to the HEVC coded data, the coded data transcoder 104 quadruples cu_size, tu_size, and the horizontal component value and vertical component value of the motion vector of the motion information, given that the horizontal resolution and the vertical resolution are 1/4. The coded data transcoder 104 also skips the above-mentioned merging process for HEVC coded data, given that $16 \times 16$ pixels in 1080p correspond to $64 \times 64$ pixels in 4320p.

Though the input image is encoded using a combination of one first video encoding means and one second video encoding means in each of the foregoing exemplary embodiments, the present invention is also applicable to, for example, a video encoding device that divides the input image into four screens as depicted in Fig. 18 and processes the four divided screens in parallel using four first video encoders and four second video encoders.

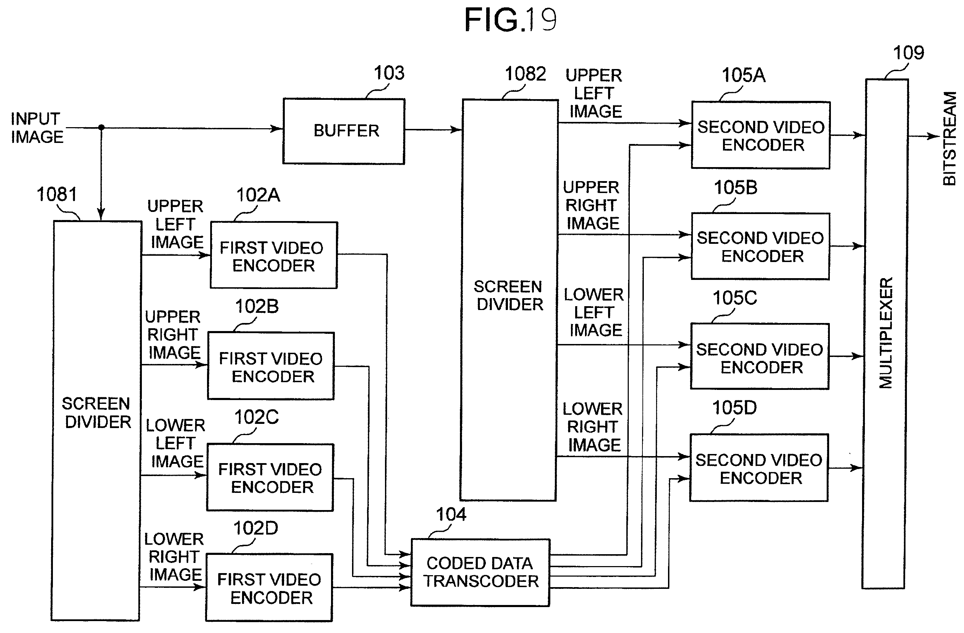

Fig. 19 is a block diagram depicting a structural example of a video encoding device for processing divided screens in parallel. The video encoding device depicted in Fig. 19 includes: a screen divider 1081 for dividing an input image into four screens; first video encoders 102A ,102B, 102C, and 102D for encoding the respective divided screens; a buffer 103; a coded data transcoder 104; a screen divider 1082 for dividing an input image supplied from the buffer 103 into four screens; second video encoders 105A, 105B, 105C, and 105D for encoding the respective divided screens; and a multiplexer 109 for multiplexing coded data from the second video encoders 105A, 105B, 105C, and 105D and outputting a bitstream.

The functions of the first video encoders 102A ,102B, 102C, and 102D are the same as the function of the first video encoder 102 in each of the foregoing exemplary embodiments. The functions of the second video encoders 105A, 105B, 105C, and 105D are the same as the function of the second video encoder 105 in each of the foregoing exemplary embodiments.

The functions of the buffer 103 and the coded data transcoder 104 are the same as the functions in each of the foregoing exemplary embodiments. In this exemplary embodiment, however, the coded data transcoder 104 respectively transcodes coded data output from the four first video encoders 102A ,102B, 102C, and 102D and supplies the transcoded data to the second video encoders 105A, 105B, 105C, and 105D.

Though the second video encoder 105 encodes the input image in each of the foregoing exemplary embodiments, the present invention is also applicable to a video encoding device for transcoding an input bitstream.

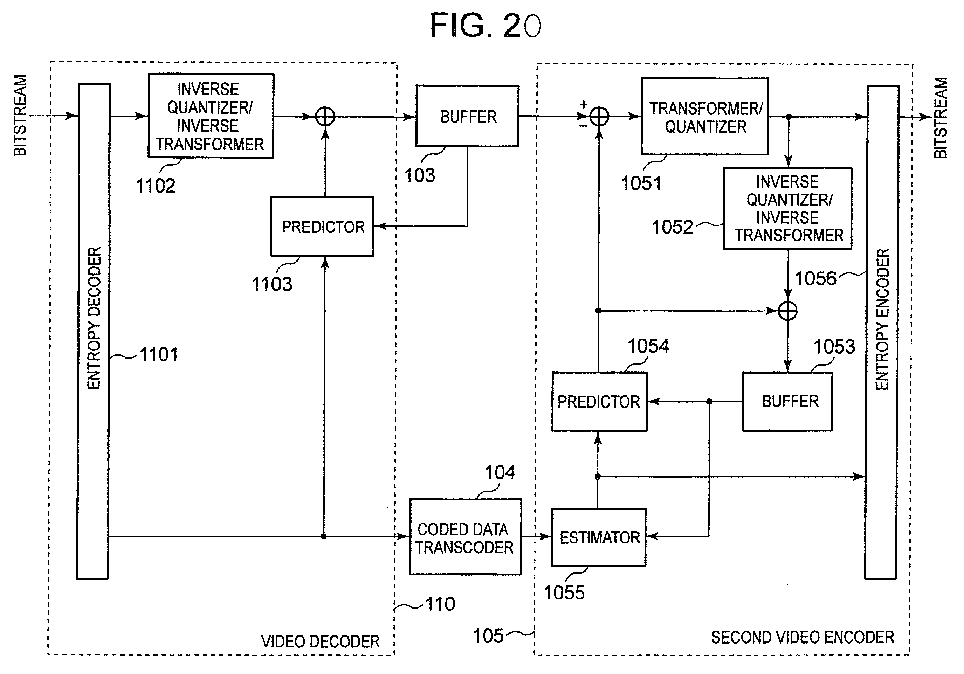

Fig. 20 is a block diagram depicting a structural example of a video encoding device for transcoding an input bitstream. As depicted in Fig. 20, the first video encoder 102 has been replaced by a video decoder 110, and the video decoder 110 decodes the bitstream and the second video encoder 105 encodes the decoded image stored in the buffer 103.

The video decoder 110 includes an entropy decoder 1101 for entropy-decoding a prediction parameter and a transform quantization value included in the bitstream and supplying the results to the inverse quantizer/inverse transformer 1102 and the predictor 1103. The inverse quantizer/inverse transformer 1102 inverse-quantizes the transform quantization value, and inverse-frequency-transforms the frequency transform coefficient obtained by the inverse quantization. The predictor 1103 generates a prediction signal using a reconstructed image stored in the buffer 103, based on the entropy-decoded prediction parameter.

The functions of the buffer 103, the coded data transcoder 104, and the second video encoder 105 are the same as the functions in each of the foregoing exemplary embodiments.

Each of the foregoing exemplary embodiments may be realized by hardware or a computer program.

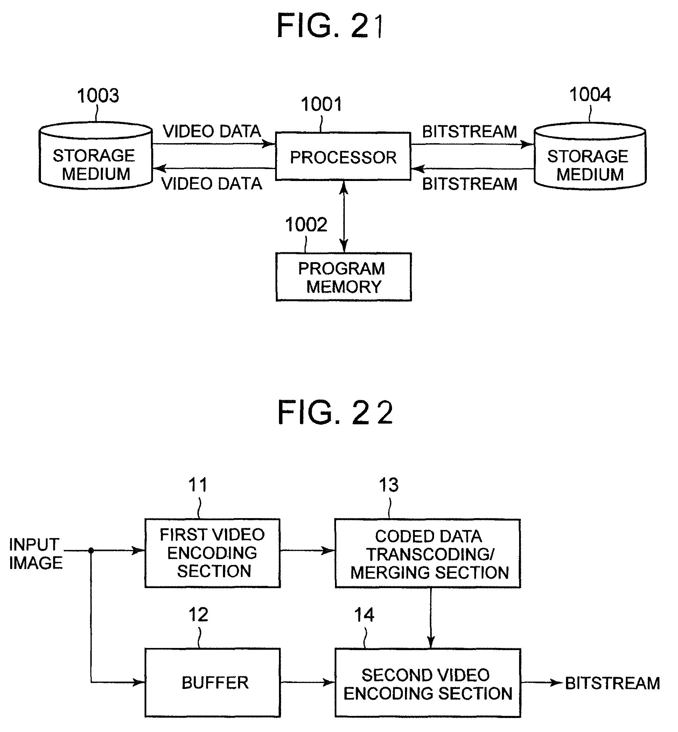

An information processing system depicted in Fig. 21 includes a processor 1001, a program memory 1002, a storage medium 1003 for storing video data, and a storage medium 1004 for storing a bitstream. The storage medium 1003 and the storage medium 1004 may be separate storage media, or storage areas included in the same storage medium. A magnetic storage medium such as a hard disk is available as a storage medium.

In the information processing system depicted in Fig. 21, a program for realizing the functions of the blocks (except the buffer block) depicted in each of the drawings of the exemplary embodiments is stored in the program memory 1002. The processor 1001 realizes the functions of the video encoding device described in each of the foregoing exemplary embodiments, by executing processes according to the program stored in the program memory 1002.

Fig. 22 is a block diagram depicting main parts of a video encoding device according to the present invention. As depicted in Fig. 22, the video encoding device includes: a first video encoding section 11 (e.g. the first video encoder 102 depicted in Fig. 1) for encoding an input image to generate first coded data; a buffer 12 (e.g. the buffer 103 depicted in Fig. 1) for storing the input image; a coded data transcoding/merging section 13 (e.g. the coded data transcoder 104 depicted in Fig. 1) for transcoding and then merging the first coded data generated by the first video encoding section 11, to generate second coded data; and a second video encoding section 14 (e.g. the second video encoder 105 depicted in Fig. 1) for encoding the input image stored in the buffer 12 based on the second coded data supplied from the coded data transcoding/merging section 13, to generate a bitstream. The first video encoding section 11 has a function of handling a first encoding processing different from a second encoding processing handled by the second video encoding section 14. The coded data transcoding/merging section 13 transcodes coded data by the first encoding processing to coded data corresponding to the second encoding processing.

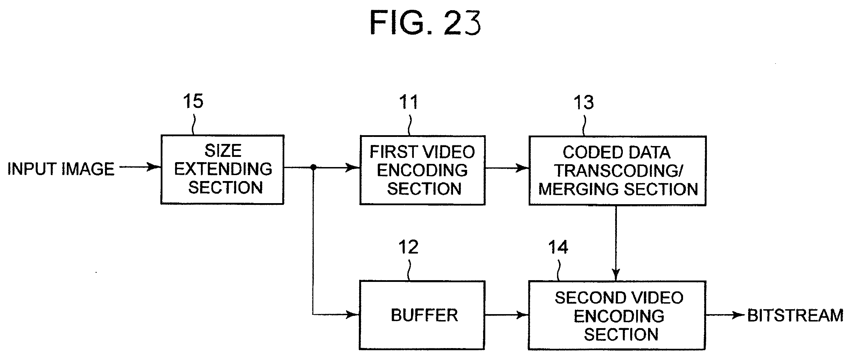

Fig. 23 is a block diagram depicting main parts of another video encoding device according to the present invention. As depicted in Fig. 23, the video encoding device may further include a size extending section 15 for extending a size of the input image to a multiple of the largest CU size supported by the first video encoding section 11, wherein the first video encoding section 11 encodes the input image size-extended by the size extending section 15 (e.g. the size extender 101 depicted in Fig. 14) to generate the first coded data, and wherein the buffer 12 stores the input image size-extended by the size extending section 15. The largest CU size supported by the first video encoding section 11 is less than or equal to the largest CU size supported by the second video encoding section 14.

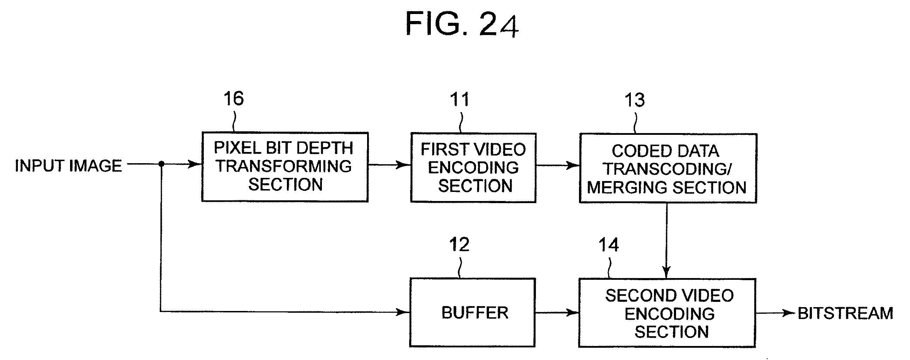

Fig. 24 is a block diagram depicting main parts of another video encoding device according to the present invention. As depicted in Fig. 24, the video encoding device may further include a pixel bit depth transforming section 16 for reducing a pixel bit depth of the input image, wherein the first video encoding section 11 encodes the input image with the pixel bit depth reduced by the pixel bit depth transforming section 16. The pixel bit depth supported by the first video encoding section 11 is less than or equal to the pixel bit depth supported by the second video encoding section 14.

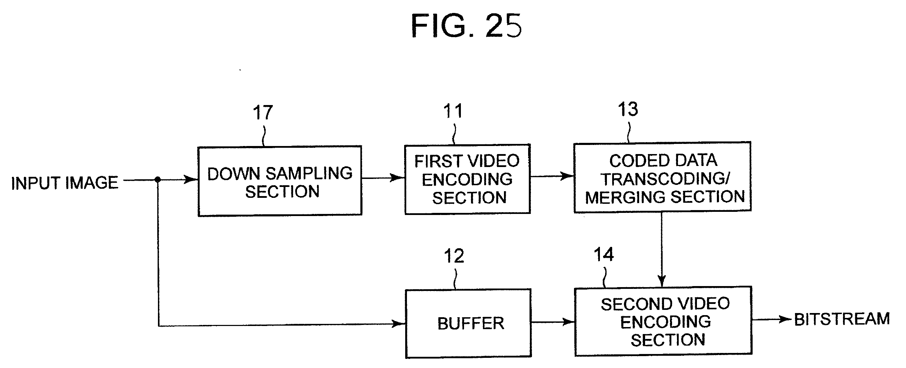

Fig. 25 is a block diagram depicting main parts of another video encoding device according to the present invention. As depicted in Fig. 25, the video encoding device may further include a down sampling section 17 for reducing spatial resolution of the input image, wherein the first video encoding section 11 encodes the input image with the spatial resolution reduced by the down sampling section 17 to generate the first coded data, and wherein the coded data transcoding/merging section 13 generates the second coded data based on a ratio in spatial resolution of video encoded by the first video encoding section 11 and video encoded by the second video encoding section 14. The spatial resolution supported by the first video encoding section 11 is less than or equal to the spatial resolution supported by the second video encoding section 14.

Part or all of the aforementioned exemplary embodiments can be described as Supplementary notes mentioned below, but the structure of the present invention is not limited to the following structures.

(Supplementary note 1)

A video encoding device comprising: first video encoding means for encoding an input image to generate first coded data; buffer means for storing the input image; coded data transcoding/merging means for transcoding and then merging the first coded data generated by the first video encoding means, to generate second coded data; and second video encoding means for encoding the input image stored in the buffer means based on the second coded data supplied from the coded data transcoding/merging means, to generate a bitstream, wherein the first video encoding means has a function of handling a first encoding process different from a second encoding process handled by the second video encoding means, the coded data transcoding/merging means transcodes coded data by the first encoding process to coded data corresponding to the second encoding process, the largest CU size supported by the first video encoding means is less than or equal to the largest CU size supported by the second video encoding means, the pixel bit depth supported by the first video encoding means is less than or equal to the pixel bit depth supported by the second video encoding means, the video encoding device further comprises size extending means for extending the size of the input image to a multiple of the largest CU size supported by the first video encoding means and pixel bit depth transforming means for reducing the pixel bit depth of the input image the size of which is extended by the size extending means, the first video encoding means encodes the input image whose pixel bit depth is reduced by the pixel bit depth transforming means, and the buffer means stores the input image the size of which is extended by the size extending means.

(Supplementary note 2)

A video encoding program for causing a computer to execute: a process of encoding an input image to generate first coded data; a process of storing the input image in buffer means for storing the input image; a process of transcoding the first coded data and merging the first coded data to generate second coded data; and a process of encoding the input image stored in the buffer means based on the second coded data by a process of handling an encoding process different from an encoding process handled in the process of generating the first coded data to generate a bitstream, wherein upon generating the second coded data, the video encoding program is to transcode coded data by a first encoding process to coded data by a second encoding process, the pixel bit depth supported by means for generating the first coded data is less than or equal to the pixel bit depth supported by means for generating the bitstream, and the video encoding program further causes the computer to reduce the pixel bit depth of the input image, and in the process of generating the first coded data, to encode the input image whose pixel bit depth is reduced.

(Supplementary note 2)

A video encoding program for causing a computer to execute: a process of encoding an input image to generate first coded data; a process of storing the input image in buffer means for storing the input image; a process of transcoding the first coded data and merging the first coded data to generate second coded data; and a process of encoding the input image stored in the buffer means based on the second coded data by a process of handling an encoding process different from an encoding process handled in the process of generating the first coded data to generate a bitstream, wherein upon generating the second coded data, the video encoding program is to transcode coded data by s first encoding process to coded data by a second encoding process, the spatial resolution supported by means for generating the first coded data is less than or equal to the spatial resolution supported by means for generating the bitstream, and the video encoding program further causes the computer to execute: a process of performing down sampling to reduce the spatial resolution of the input image; a process of encoding the input image, whose spatial resolution is reduced, in the process of generating the first coded data to generate the first coded data; and a process of generating the second coded data based on a ratio between respective spatial resolutions of video encoded in the process of generating the first coded data and the process of generating the bitstream.

While the present invention has been described with reference to the exemplary embodiments and examples, the present invention is not limited to the aforementioned exemplary embodiments and examples. Various changes understandable to those skilled in the art within the scope of the present invention can be made to the structures and details of the present invention.

This application claims priority based on Japanese Patent Application No. 2013-185994 filed on September 9, 2013, the disclosures of which are incorporated herein in their entirety.

| | |
|---|---|
| 11 | first video encoding section |
| 12, 103, 1023, 1053 | buffer |
| 13 | coded data transcoding/merging section |
| 14 | second video encoding section |
| 15 | size extending section |
| 16 | pixel bit depth transforming section |
| 17 | down sampling section |
| 101 | size extender |
| 102, 102A, 102B, 102C, 102D | first video encoder |
| 104 | coded data transcoder |
| 105, 105A, 105B, 105C, 105D | second video encoder |
| 106 | pixel bit depth transformer |
| 107 | down sampler |
| 109 | multiplexer |
| 110 | video decoder |
| 1001 | processor |
| 1002 | program memory |
| 1003, 1004 | storage medium |
| 1021, 1051 | transformer/quantizer |
| 1022, 1052, 1102 | inverse quantizer/inverse transformer |
| 1024, 1054, 1103 | predictor |
| 1025, 1055 | estimator |
| 1056 | entropy encoder |
| 1081, 1082 | screen divider |
| 1101 | entropy decoder |

Claims

1. A video encoding device comprising:

first video encoding means for encoding an input image to generate first coded data;
buffer means for storing the input image;
coded data transcoding/merging means for transcoding and then merging the first coded data generated by the first video encoding means, to generate second coded data; and

second video encoding means for estimating a syntax value for encoding the input image stored in the buffer means based on the second coded data supplied from the coded data transcoding/merging means, to generate a bitstream,

wherein the first video encoding means has a function of handling a first encoding process included in a second encoding process handled by the second video encoding means, and

wherein the coded data transcoding/merging means transcodes coded data by the first encoding process to coded data corresponding to the second encoding process.

2. The video encoding device according to claim 1, wherein

a largest CU size supported by the first video encoding means is less than or equal to a largest CU size supported by the second video encoding means,

the video encoding device further comprises size extending means for extending a size of the input image to a multiple of the largest CU size supported by the first video encoding means,

the first video encoding means encodes the input image the size of which is extended by the size extending means to generate first coded data, and

the buffer means stores the input image the size of which is extended by the size extending means.

3. The video encoding device according to claim 1, wherein

a pixel bit depth supported by the first video encoding means is less than or equal to a pixel bit depth supported by the second video encoding means,

the video encoding device further comprises pixel bit depth transforming means for reducing a pixel bit depth of the input image, and

the first video encoding means encodes the input image whose pixel bit depth is reduced by the pixel bit depth transforming means.

4. The video encoding device according to claim 1, wherein

a spatial resolution supported by the first video encoding means is less than or equal to a spatial resolution supported by the second video encoding means,

the video encoding device further comprises down sampling means for reducing a spatial resolution of the input image,

the first video encoding means encodes the input image whose spatial resolution is reduced by the down sampling means to generate first coded data, and

the coded data transcoding/merging means generates second coded data based on a ratio between respective spatial resolutions of video encoded by the first video encoding means and the second video encoding means.

5. A video encoding method comprising:

encoding an input image to generate first coded data;

storing the input image in buffer means for storing the input image;

transcoding and then merging the first coded data, to generate second coded data; and

estimating a syntax value for encoding the input image stored in the buffer means based on the second coded data to generate a bitstream, using means having a function of handling a second encoding process that includes a first encoding process handled by means for generating the first coded data,

wherein when generating the second coded data, coded data by the first encoding process is transcoded to coded data corresponding to the second encoding process.

6. The video encoding method according to claim 5, wherein

a largest CU size supported by the means for generating the first coded data is less than or equal to a largest CU size supported by means for generating the bitstream,

a size of the input image is extended to a multiple of the largest CU size supported by the means for generating the first coded data,

encoding size-extended input image to generate the first coded data, and

storing the size-extended input image in the buffer means.

7. The video encoding method according to claim 5, wherein

a pixel bit depth supported by the means for generating the first coded data is less than or equal to a pixel bit depth supported by means for generating the bitstream,

reducing a pixel bit depth of the input image, and

wherein the means for generating the first coded data encodes the input image whose pixel bit depth is reduced.

**8.** The video encoding method according to claim 5, wherein
a spatial resolution supported by the means for generating the first coded data is less than or equal to a spatial resolution supported by means for generating the bitstream,
performing down sampling to reduce a spatial resolution of the input image,
encoding the input image whose spatial resolution is reduced to generate the first coded data by the means for generating the first coded data, and
generating the second coded data based on a ratio between respective spatial resolutions of video encoded by the means for generating the first coded data and the means for generating the bitstream.

**9.** A video encoding program for causing a computer to execute:

a process of encoding an input image to generate first coded data;
a process of storing the input image in buffer means for storing the input image;
a process of transcoding and then merging the first coded data, to generate second coded data; and
a process of estimating a syntax value for encoding the input image stored in the buffer means based on the second coded data to generate a bitstream, by a process of handling a second encoding process that includes a first encoding process handled in the process of generating the first coded data,
wherein the video encoding program causes the computer to, when generating the second coded data, transcode coded data by the first encoding process to coded data corresponding to the second encoding process.

**10.** The video encoding program according to claim 9, wherein a largest CU size supported by means for generating the first coded data is less than or equal to a largest CU size supported by means for generating the bitstream,
the video encoding program further causes the computer to execute:

a process of extending a size of the input image to a multiple of the largest CU size supported by the means for generating the first coded data;
a process of encoding size-extended input image to generate the first coded data; and
a process of storing the size-extended input image in the buffer means.

# FIG. 1

INPUT IMAGE

SIZE EXTENDER 101

**FIRST VIDEO ENCODER** 102

+ − TRANSFORMER/ QUANTIZER 1021

INVERSE QUANTIZER /INVERSE TRANSFORMER 1022

BUFFER 1023

PREDICTOR 1024

ESTIMATOR 1025

BUFFER 103

CODED DATA TRANSCODER 104

105

**SECOND VIDEO ENCODER**

+ − TRANSFORMER/ QUANTIZER 1051

INVERSE QUANTIZER/ INVERSE TRANSFORMER 1052

1056

PREDICTOR 1054

BUFFER 1053

ESTIMATOR 1055

ENTROPY ENCODER

BITSTREAM

EP 2 975 847 A1

# FIG. 2

```
typedef struct
{
  mb_type;
  sub_mb_type[4];
  ref_idx_l0[4];
  ref_idx_l1[4];
  mv_l0[4][4][2];
  mv_l1[4][4][2];
  intra_lumaNxN_pred[4][4];
  intra_chroma_pred;
  transform_size_8x8_flag;
  cbp;
} AVCMB
```

# FIG. 3

# FIG. 4

PERIPHERAL PIXEL = REFERENCE PIXEL

2:DC (AVERAGE VALUE)

(a)  Intra_4x4

(b)  PREDICTION DIRECTION

PERIPHERAL PIXEL

REFERENCE PIXEL

$a=(Y+2A+B+2)/4$
$b=(A+2B+C+2)/4$
$c=(B+2C+D+2)/4$
:

(c)  Intra_8x8

EP 2 975 847 A1

# FIG. 5

16x16 BLOCK

2:DC (AVERAGE), 3:Plane(PLANE)

1

0

(a)  Intra_16x16

(b)  PREDICTION DIRECTION

# FIG. 6

16x16    16x8    8x16    Tree

8x8    8x4    4x8    4x4

# FIG. 7

```
typedef struct
{
  cu_size[4];
  tu_size[4];
  pred_mode_flag[4];
  part_mode[4];
  ref_idx_l0[4];
  ref_idx_l1[4];
  mv_l0[4][4][2];
  mv_l1[4][4][2];
  intra_lumaNxN_pred[4][4];
  intra_chroma_pred[4];
} HEVCCB
```

# FIG. 8

| AVC | | HEVC | | | | |
|---|---|---|---|---|---|---|
| mb_type | intra_lumaNxN_pred | cu_size | tu_size | pred_mode_flag | part_mode | intra_lumaNxN_pred |
| Intra_16x16 | V | 16 | 4 | 1 | 2Nx2N | INHERITANCE |
| Intra_16x16 | H | 16 | 4 | 1 | 2Nx2N | INHERITANCE |
| Intra_16x16 | DC | 16 | 4 | 1 | 2Nx2N | INHERITANCE |
| Intra_16x16 | Plane | 16 | 4 | 1 | 2Nx2N | Planar |
| Intra_8x8 | ALL PREDICTION DIRECTIONS ARE SAME IN MB | 16 | 8 | 1 | 2Nx2N | INHERITANCE |
| Intra_8x8 | OTHER | 8 | 8 | 1 | 2Nx2N | INHERITANCE |
| Intra_4x4 | ALL PREDICTION DIRECTIONS ARE SAME IN MB | 16 | 8 | 1 | 2Nx2N | INHERITANCE |
| Intra_4x4 | ALL PREDICTION DIRECTIONS ARE SAME IN 8×8 SUBBLOCK | 8 | 4 | 1 | 2Nx2N | INHERITANCE |
| Intra_4x4 | OTHER | 8 | 4 | 1 | NxN | INHERITANCE |

EP 2 975 847 A1

# FIG. 9

| AVC | | HEVC | | | | |
|---|---|---|---|---|---|---|
| mb_type | intra_lumaNxN_pred | cu_size | tu_size | pred_mode_flag | part_mode | intra_lumaNxN_pred |
| P_Skip | NA | 16 | 4 << transform_size_8x8_flag | 0 | 2Nx2N | NA |
| P_inter_16x16 | NA | 16 | 4 << transform_size_8x8_flag | 0 | 2Nx2N | NA |
| P_inter_16x8 | NA | 16 | 4 << transform_size_8x8_flag | 0 | 2NxN | NA |
| P_inter_8x16 | NA | 16 | 4 << transform_size_8x8_flag | 0 | Nx2N | NA |
| P_8x8 | NA | 16 | 4 << transform_size_8x8_flag | 0 | 2Nx2N | NA |
| Intra_16x16 | V | 16 | 4 | 1 | 2Nx2N | INHERITANCE |
| Intra_16x16 | H | 16 | 4 | 1 | 2Nx2N | INHERITANCE |
| Intra_16x16 | DC | 16 | 4 | 1 | 2Nx2N | INHERITANCE |
| Intra_16x16 | Plane | 16 | 4 | 1 | 2Nx2N | Planar |
| Intra_8x8 | ALL PREDICTION DIRECTIONS ARE SAME IN MB | 16 | 8 | 1 | 2Nx2N | INHERITANCE |
| Intra_8x8 | OTHER | 8 | 8 | 1 | 2Nx2N | INHERITANCE |
| Intra_4x4 | ALL PREDICTION DIRECTIONS ARE SAME IN MB | 16 | 8 | 1 | 2Nx2N | INHERITANCE |
| Intra_4x4 | ALL PREDICTION DIRECTIONS ARE SAME IN 8×8 SUBBLOCK | 8 | 4 | 1 | 2Nx2N | INHERITANCE |
| Intra_4x4 | OTHER | 8 | 4 | 1 | NxN | INHERITANCE |

EP 2 975 847 A1

# FIG. 10

| AVC | | | HEVC | | | | |
|---|---|---|---|---|---|---|---|
| mb_type | MV | intra_lumaNxN_pred | cu_size | tu_size | pred_mode_flag | part_mode | intra_lumaNxN_pred |
| B_Skip | ALL MOTION VECTORS ARE SAME IN MB | NA | 16x16 | 4 << transform_size_8x8_flag | 0 | 2Nx2N | NA |
| B_Skip | NOT ALL MOTION VECTORS ARE SAME IN MB | NA | 8x8 | 4 << transform_size_8x8_flag | 0 | 2Nx2N | NA |
| B_Direct_16x16 | ALL MOTION VECTORS ARE SAME IN MB | NA | 16x16 | 4 << transform_size_8x8_flag | 0 | 2Nx2N | NA |
| B_Direct_16x16 | NOT ALL MOTION VECTORS ARE SAME IN MB | NA | 8x8 | 4 << transform_size_8x8_flag | 0 | 2Nx2N | NA |
| B_inter_16x16 | NA | NA | 16x16 | 4 << transform_size_8x8_flag | 0 | 2Nx2N | NA |
| B_inter_16x8 | NA | NA | 16x16 | 4 << transform_size_8x8_flag | 0 | 2NxN | NA |
| B_inter_8x16 | NA | NA | 16x16 | 4 << transform_size_8x8_flag | 0 | Nx2N | NA |
| B_8x8 | NA | NA | 8x8 | 4 << transform_size_8x8_flag | 0 | 2Nx2N | NA |
| Intra_16x16 | NA | V | 16 | 4 | 1 | 2Nx2N | INHERITANCE |
| Intra_16x16 | NA | H | 16 | 4 | 1 | 2Nx2N | INHERITANCE |
| Intra_16x16 | NA | DC | 16 | 4 | 1 | 2Nx2N | INHERITANCE |
| Intra_16x16 | NA | Plane | 16 | 4 | 1 | 2Nx2N | Planar |
| Intra_8x8 | NA | ALL PREDICTION DIRECTIONS ARE SAME IN MB | 16 | 8 | 1 | 2Nx2N | INHERITANCE |
| Intra_8x8 | NA | OTHER | 8 | 8 | 1 | 2Nx2N | INHERITANCE |
| Intra_4x4 | NA | ALL PREDICTION DIRECTIONS ARE SAME IN MB | 16 | 8 | 1 | 2Nx2N | INHERITANCE |
| Intra_4x4 | NA | ALL PREDICTION DIRECTIONS ARE SAME IN 8×8 SUBBLOCK | 8 | 4 | 1 | 2Nx2N | INHERITANCE |
| Intra_4x4 | NA | OTHER | 8 | 4 | 1 | NxN | INHERITANCE |

EP 2 975 847 A1

# FIG. 11

HEVCCB

| | |
|---|---|
| 0 | 1 |
| 2 | 3 |

32 PIXELS (vertical)

32 PIXELS (horizontal)

# FIG. 12

HEVCCB

| | | | |
|---|---|---|---|
| 0 | 1 | 2 | 3 |
| 4 | 5 | 6 | 7 |
| 8 | 9 | 10 | 11 |
| 12 | 13 | 14 | 15 |

64 PIXELS (vertical)

64 PIXELS (horizontal)

# FIG. 13

```
        ┌─────────────┐
        │    START    │
        └──────┬──────┘
               │
               ▼
   ┌───────────────────────┐
   │      EXTEND SIZE       │ ~S101
   └───────────┬───────────┘
               │
               ▼
   ┌───────────────────────┐
   │   FIRST VIDEO ENCODE   │ ~S102
   └───────────┬───────────┘
               │
               ▼
   ┌───────────────────────┐
   │  TRANSCODE CODED DATA  │ ~S103
   └───────────┬───────────┘
               │
               ▼
   ┌───────────────────────┐
   │  SECOND VIDEO ENCODE   │ ~S104
   └───────────┬───────────┘
               │
               ▼
        ┌─────────────┐
        │     END     │
        └─────────────┘
```

# FIG. 14

INPUT IMAGE

SIZE EXTENDER — 101

PIXEL BIT DEPTH TRANSFORMER

106

TRANSFORMER /QUANTIZER — 1021

INVERSE QUANTIZER /INVERSE TRANSFORMER

1022

1024

PREDICTOR

1025

BUFFER — 1023

ESTIMATOR

FIRST VIDEO ENCODER — 102

BUFFER

103

CODED DATA TRANSCODER

104

105

TRANSFORMER/ QUANTIZER

1051

INVERSE QUANTIZER/ INVERSE TRANSFORMER

1052

PREDICTOR — 1054

BUFFER — 1053

ESTIMATOR

1055

1056

ENTROPY ENCODER

BITSTREAM

SECOND VIDEO ENCODER

EP 2 975 847 A1

# FIG. 15

```
        ┌─────────────┐
        │    START    │
        └─────────────┘
               │
               ▼
┌──────────────────────────────┐
│   TRANSFORM PIXEL BIT DEPTH   │──S201
└──────────────────────────────┘
               │
               ▼
┌──────────────────────────────┐
│      FIRST VIDEO ENCODE       │──S202
└──────────────────────────────┘
               │
               ▼
┌──────────────────────────────┐
│     TRANSCODE CODED DATA      │──S203
└──────────────────────────────┘
               │
               ▼
┌──────────────────────────────┐
│     SECOND VIDEO ENCODE       │──S204
└──────────────────────────────┘
               │
               ▼
        ┌─────────────┐
        │     END     │
        └─────────────┘
```

# FIG. 16

FIG. 16

# FIG. 17

```
START
  ↓
DOWN SAMPLE              ~S301
  ↓
FIRST VIDEO ENCODE       ~S302
  ↓
TRANSFORM CODED DATA     ~S303
  ↓
SECOND VIDEO ENCODE      ~S304
  ↓
END
```

# FIG. 18

| | |
|---|---|
| UPPER LEFT | UPPER RIGHT |
| LOWER LEFT | LOWER RIGHT |

# FIG.19

EP 2 975 847 A1

# FIG. 20

EP 2 975 847 A1

## FIG. 21

## FIG. 22

# FIG. 23

EP 2 975 847 A1

# FIG. 24

```
                16              11                13
                 ┌──────────┐    ┌──────────┐    ┌──────────────┐
                 │PIXEL BIT │    │FIRST VIDEO│    │CODED DATA    │
INPUT IMAGE ──●─→│DEPTH     │──→ │ENCODING   │──→ │TRANSCODING/  │
              │  │TRANSFORMING│  │SECTION    │    │MERGING SECTION│
              │  │SECTION   │    └──────────┘    └──────────────┘
              │  └──────────┘                           │
              │                                         │
              │         12              14              │
              │    ┌──────────┐    ┌──────────────┐     │
              │    │          │    │SECOND VIDEO  │←────┘
              └───→│ BUFFER   │──→ │ENCODING      │──→ BITSTREAM
                   │          │    │SECTION       │
                   └──────────┘    └──────────────┘
```

# FIG. 25

EP 2 975 847 A1

# FIG. 26

# FIG. 27

INTER-FRAME PREDICTION BLOCK

$MV=(mv_x,mv_y)$

$mv_y$

$mv_x$

BLOCK TO BE ENCODED

(REFERENCE PICTURE)

(PICTURE TO BE ENCODED)

t-1                                                                t          TIME

EP 2 975 847 A1

# FIG. 28

INPUT IMAGE

1021 TRANSFORMER/ QUANTIZER

1022 INVERSE QUANTIZER/INVERSE TRANSFORMER

1024 PREDICTOR

1023 BUFFER

1025 ESTIMATOR

1056 ENTROPY ENCODER

BITSTREAM

EP 2 975 847 A1

FIG. 29

# FIG. 30

# FIG. 31

# FIG. 32

**INTERNATIONAL SEARCH REPORT**

International application No.

PCT/JP2014/003933

| A. CLASSIFICATION OF SUBJECT MATTER |
|---|
| *H04N19/194*(2014.01)i, *H04N19/103*(2014.01)i, *H04N19/157*(2014.01)i, *H04N19/176*(2014.01)i, *H04N19/46*(2014.01)i |

According to International Patent Classification (IPC) or to both national classification and IPC

| B. FIELDS SEARCHED |
|---|
| Minimum documentation searched (classification system followed by classification symbols) |
| H04N19/00-19/98 |

Documentation searched other than minimum documentation to the extent that such documents are included in the fields searched

| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 11-298904 A (Nippon Telegraph and Telephone Corp.), 29 October 1999 (29.10.1999), paragraphs [0002] to [0021]; fig. 1, 4 to 5 (Family: none) | 1-10 |
| A | WO 2011/125313 A1 (Mitsubishi Electric Corp.), 13 October 2011 (13.10.2011), paragraphs [0024], [0058] to [0059] & US 2013/0028326 A1 & EP 2557792 A1 & TW 201143458 A & CA 2795425 A & SG 184528 A & CN 102934438 A & MX 2012011695 A & KR 10-2013-0028092 A & KR 10-2014-0010192 A | 2,6,10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 September, 2014 (29.09.14) | 07 October, 2014 (07.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/003933

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-4051 A  (Nippon Telegraph and Telephone Corp.),<br>06 January 2011 (06.01.2011),<br>paragraphs [0008] to [0010]<br>(Family: none) | 3,7 |
| A | JP 9-182080 A  (Sony Corp.),<br>11 July 1997 (11.07.1997),<br>paragraphs [0027] to [0033], [0059] to [0070];<br>fig. 1, 42<br>(Family: none) | 4,8 |
| A | WO 2009/035144 A1  (Sony Corp.),<br>19 March 2009 (19.03.2009),<br>entire text; all drawings<br>& JP 5212372 B          & US 2010/0046621 A1<br>& EP 2187648 A1         & CN 101641958 A<br>& KR 10-2010-0065240 A  & TW 200920142 A | 1-10 |
| A | WO 2008/051517 A2  (THOMSON LICENSING),<br>02 May 2008 (02.05.2008),<br>entire text; all drawings<br>& JP 2010-507983 A        & JP 5264747 B<br>& US 2010/0027622 A1     & EP 2087739 A<br>& CN 101529912 A | 1-10 |
| A | JP 10-32816 A  (Matsushita Electric Industrial Co., Ltd.),<br>03 February 1998 (03.02.1998),<br>entire text; all drawings<br>(Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012104940 A
- JP 2001359104 A
- JP 2013185994 A